(19) **Europäisches Patentamt / European Patent Office / Office européen des brevets**

(11) **EP 3 913 393 B1**

(12) # FASCICULE DE BREVET EUROPEEN

(45) Date de publication et mention de la délivrance du brevet:
**12.11.2025 Bulletin 2025/46**

(21) Numéro de dépôt: **21172820.9**

(22) Date de dépôt: **07.05.2021**

(51) Classification Internationale des Brevets (IPC):
**G01S 7/48** *(2006.01)* **G01S 17/34** *(2020.01)*
**G01S 17/89** *(2020.01)*

(52) Classification Coopérative des Brevets (CPC):
**G01S 17/34; G01S 7/4818; G01S 7/4917;**
**G01S 17/894**

(54) **DISPOSITIF DE DÉTECTION AMELIORÉ ET SYSTÈME LIDAR ASSOCIÉ**

VERBESSERTE DETEKTIONSVORRICHTUNG UND ENTSPRECHENDES LIDAR-SYSTEM

IMPROVED DETECTION DEVICE AND ASSOCIATED LIDAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2020 FR 2005186**

(43) Date de publication de la demande:
**24.11.2021 Bulletin 2021/47**

(60) Demande divisionnaire:
**25199175.8 / 4 632 435**

(73) Titulaire: **Commissariat à l'Energie Atomique et aux Energies Alternatives**
**75015 Paris (FR)**

(72) Inventeurs:
- **FREY, Laurent**
  **38054 Grenoble Cedex 09 (FR)**
- **DAAMI, Anis**
  **38054 Grenoble Cedex 09 (FR)**
- **FANGET, Stéphane**
  **38054 Grenoble Cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**JP-A- 2016 105 082 US-A1- 2020 256 995**
**US-B2- 9 826 214**

- **FIROOZ AFLATOUNI ET AL: "Nanophotonic coherent imager", OPTICS EXPRESS, vol. 23, no. 4, 19 February 2015 (2015-02-19), pages 5117, XP055764834, DOI: 10.1364/OE.23.005117**
- **AUDE MARTIN ET AL: "Photonic Integrated Circuit-Based FMCW Coherent LiDAR", JOURNAL OF LIGHTWAVE TECHNOLOGY, vol. 36, no. 19, 1 October 2018 (2018-10-01), USA, pages 4640 - 4645, XP055764841, ISSN: 0733-8724, DOI: 10.1109/JLT.2018.2840223**
- **KE WANG ET AL: "Performance of High-Speed Reconfigurable Free-Space Card-to-Card Optical Interconnects Under Air Turbulence", JOURNAL OF LIGHTWAVE TECHNOLOGY, IEEE, USA, vol. 31, no. 11, 1 June 2013 (2013-06-01), pages 1687 - 1693, XP011500568, ISSN: 0733-8724, DOI: 10.1109/JLT.2013.2256459**

## Description

### DOMAINE DE L'INVENTION

La présente invention concerne le domaine de l'imagerie par Lidar cohérent et plus particulièrement les détecteurs utilisés dans de tels systèmes.

### ETAT DE LA TECHNIQUE

L'imagerie d'une scène par lidar cohérent tire parti de la nature de l'émission cohérente d'une source laser afin d'amplifier le signal utile réfléchi par la scène par un signal issu d'une voie de référence et cohérent avec le signal utile.

Le principe d'un lidar cohérent est bien connu de l'état de la technique. Un lidar cohérent comprend une source cohérente, typiquement un laser, qui émet une onde lumineuse cohérente (domaine IR, visible ou UV proche), un dispositif d'émission qui permet d'illuminer un volume de l'espace, et un dispositif de réception, qui collecte une fraction de l'onde lumineuse rétrodiffusée par une cible T. Le décalage de fréquence Doppler de l'onde rétrodiffusée est fonction de la vitesse radiale v de la cible T : A la réception on effectue un mélange entre l'onde lumineuse rétrodiffusée reçue dénommée onde signal S de fréquence signal fs et une partie de l'onde émise qui n'est pas passée par la scène, dénommée onde LO pour « oscillateur local », et présente une fréquence d'oscillateur local fLO. L'interférence de ces deux ondes est détectée par un photodétecteur PD, et le signal électrique en sortie du détecteur présente un terme oscillant dénommé signal de battement Sb, en plus des termes proportionnels à la puissance reçue et à la puissance d'oscillateur local. Ce signal est numérisé et on en extrait une information de vitesse de la cible T. JP 2016 105082 A divulgue un système d'imagerie lidar cohérent qui comprend : une source lumineuse ; un scanner de lumière de projection qui scanne une partie de la lumière séparée de la lumière d'émission de la source lumineuse, et qui génère une lumière de transmission pour rayonner sur un objet cible ; une section de formation d'image qui forme plusieurs lumières de réception respectives de la lumière de transmission réfléchie par des emplacements respectifs de l'objet cible en une image sur un plan plat unique en tant que points de formation d'image pluriels ; un récepteur optique disposé aux différents points de formation de l'image et comprenant plusieurs sections de réception optique pour mélanger chacune des différentes lumières de réception avec une lumière de référence et effectuer une détection hétérodyne optique ; et un scanner de lumière de référence qui scanne ou distribue une autre lumière séparée de la lumière d'émission de la source lumineuse et qui génère la lumière de référence pour l'irradier sur chacune des différentes sections de réception optique.

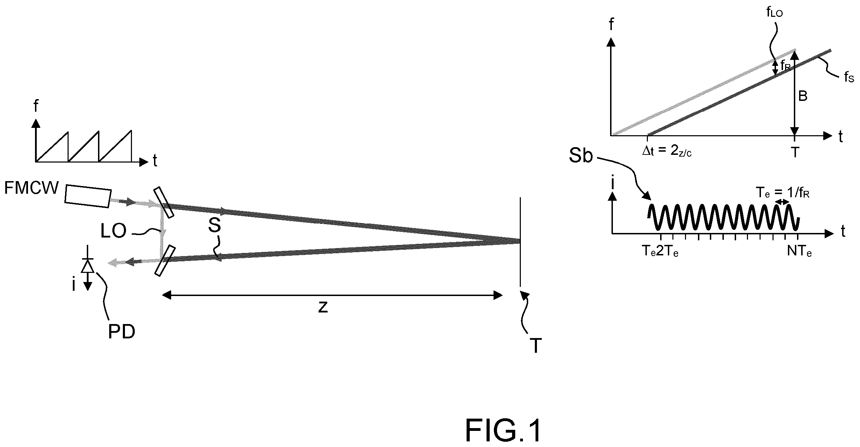

Dans un lidar cohérent à modulation de fréquence dit FMCW (« Frequency Modulated Continuous Wave ») schématisé sur la figure 1 la fréquence optique de la source cohérente f est modulée typiquement par une rampe linéaire périodique.

Les deux voies qui interfèrent sur le photo-détecteur produisent des battements dont la fréquence est proportionnelle au retard entre les deux voies, donc à la distance.

Plus précisément, pour une rampe linéaire, la fréquence des oscillations est :

$$f_R = \frac{2Bz}{cT}$$

avec B l'excursion de fréquence optique ou « chirp » pendant la durée T de la rampe, z la distance, c la vitesse de la lumière.

On peut déduire la distance z du nombre N ($N \approx Tf_R$) de périodes mesurées pendant la durée T:

$$Z \approx \frac{Nc}{2B}.$$

La résolution en distance est $\delta Z \approx \frac{c}{2B}$. Il est également possible de mesurer $f_R$ par analyse spectrale par transformée de Fourier du signal de battements.

Le signal d'interférence contient une composante continue généralement importante et inutile, qui est supprimée par un filtre électronique passe-haut si le photo-récepteur est une photodiode. Dans les montages fibrés, il est pratique d'utiliser un coupleur 3dB qui fournit, à partir des deux voies objet et référence en entrée, deux signaux de sortie en opposition de phase qui éclairent deux photodiodes en série (photodiodes balancées). Le circuit de détection permet de faire la différence des deux photo-courants, donc de supprimer le DC (mode commun) et de détecter la partie AC (signal de battement). La partie AC est généralement amplifiée en externe par un amplificateur trans-impédance (TIA) avant d'être traitée par une électronique externe, par exemple un oscilloscope, pour mesurer la fréquence.

La technique lidar FMCW est une technique de mesure hétérodyne optique (c.a.d. qui met en jeu plusieurs fréquences optiques). La technique est très peu sensible à la lumière ambiante parasite comme par exemple la lumière du soleil.

Pour faire une image complète de la scène, le lidar scanne séquentiellement la scène à l'aide d'un dispositif de balayage (image de type « rolling shutter »).

En pratique, il est difficile d'accéder à une acquisition des images de distance à cadence vidéo (typiquement 50Hz) pour des images de haute résolution (par exemple VGA ou XGA) car le temps disponible pour la mesure de distance en chaque point est très court.

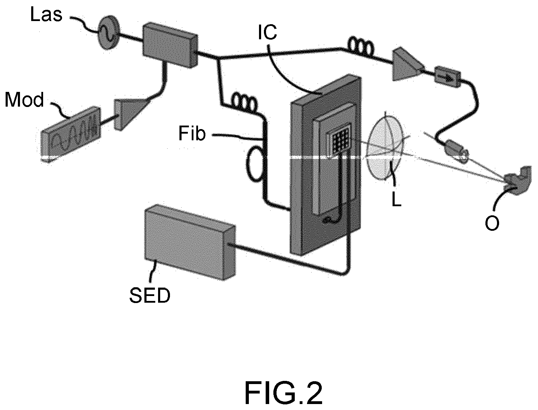

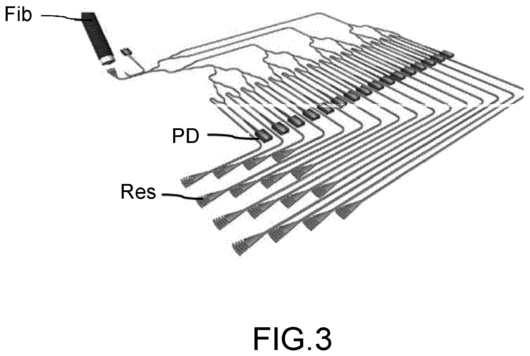

Au lieu de faire des mesures point par point, la publication Aflatouni « Nano photonic coherent imager » (2015, Optics Express vol. 23 n°4, 5117), qui utilise également la technique FMCW, décrit un dispositif dans lequel toute la scène est illuminée simultanément par le faisceau laser qui a été rendu divergent, et la photo-détection est faite en parallèle pour l'ensemble de la scène. Dans cette publication (voir figure 2), la source laser Las est modulée en fréquence par un modulateur Mod, la voie objet illumine l'objet à analyser O et une lentille L forme l'image de l'objet sur un imageur cohérent IC réalisé en optique intégrée, plus précisément sur une matrice de 4x4 réseaux de couplage optique Res. Chaque réseau Res envoie la lumière couplée vers une photodiode PD à couplage latéral située en dehors de l'image, via un guide d'onde (voir figure 3). La voie de référence est directement envoyée sur les photodiodes par une fibre optique Fib et par un réseau de guides d'ondes et de jonctions Y. La conversion du photo-courant en tension est réalisée par un amplificateur trans-impédance TIA pour chacune des 16 photodiodes. Le filtrage électronique et le traitement des signaux sont effectués à l'extérieur de la puce dans un système électronique de détection SED.

Cette technique de détection de toute la scène en parallèle est plus appropriée en principe pour augmenter la cadence d'acquisition des images de distance.

Cependant, dans l'architecture de l'imageur décrit dans la publication Aflatouni, la configuration de l'imageur cohérent n'est pas facilement extensible à un grand nombre de pixels. Il faudrait 2N guides d'onde (N pour la voie référence et N pour la voie objet) pour N pixels, c.a.d. 2 millions de guides pour un imageur à 1000x1000 pixels, ce qui pose de gros problèmes de routage et de surface occupée. Pour augmenter artificiellement le nombre de pixels effectif de leur imageur, les auteurs recourent à la technique des prises de vue multiples avec translations mécaniques successives de l'imageur, ce qui n'est pas adapté à des scènes en mouvement.

De plus l'architecture proposée est sensible à la granularité laser, dénommé speckle, générée par la rétrodiffusion de la lumière cohérente sur la scène. L'image de l'objet dans le plan du capteur est entachée de grains de speckle dont la taille latérale vaut statistiquement :

$$\Phi g = 2.\lambda.f\#$$

avec $f\# = f/D$ où $f$ est la focale de l'objectif d'imagerie et D le diamètre de sa pupille de sortie.

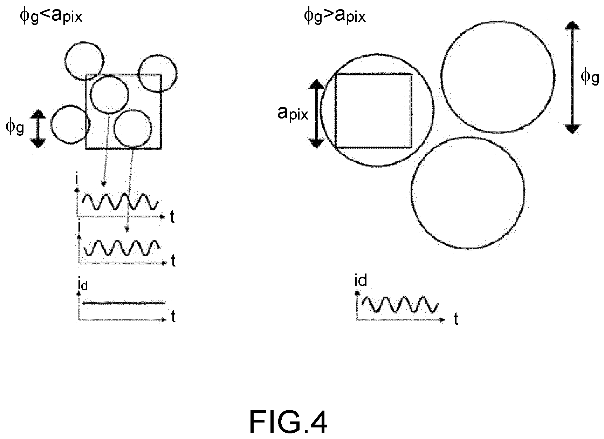

Les battements dus à l'interférence entre la voie de référence et la voie objet affectée par le speckle sont de même fréquence mais déphasés aléatoirement entre des grains de speckle voisins. Si les pixels (c'est-à-dire les réseaux récupérant la lumière) présentent une dimension apix supérieure à celle des grains de speckle $\Phi g$, tel qu'illustré en figure 4 à gauche, l'amplitude des oscillations résultantes est atténuée et peut devenir non détectable. Compte tenu de la taille des réseaux de diffraction indiquée (17x17$\mu$m) et la longueur d'onde de 1.55$\mu$m, il faudrait un grand nombre d'ouverture (f# > 6) pour avoir des grains de speckle plus gros que les pixels. Cependant, une telle optique peu ouverte n'est pas favorable à la détection d'objets peu réfléchissants ou situés à des distances importantes, qui vont donner des flux de photons rétro-diffusés très faibles ; cela implique en contrepartie d'utiliser une source laser plus puissante donc à plus forte consommation électrique ou risquant de dépasser les limites de la sécurité oculaire. Ainsi pour une optique ouverte permettant la capture d'un plus grand nombre de photons la taille des grains de speckle à la longueur d'onde de sécurité oculaire 1.55$\mu$m est typiquement inférieure à celle de la surface collectrice de lumière d'un pixel, ce qui pose des problèmes de détection.

Un but de la présente invention est de remédier aux inconvénients précités en proposant un détecteur intégré pour lidar cohérent compatible d'un grand nombre de pixels et de grains de speckle de petite taille.

## DESCRIPTION DE L'INVENTION

La présente invention a pour objet un dispositif de détection pour système d'imagerie lidar cohérent comprenant un détecteur intégré comprenant une matrice de pixels répartis sur N colonnes et M lignes et comprenant :

- un guide optique dit guide référence configuré pour recevoir un faisceau laser dit faisceau de référence,
- N guides optiques, dits guides colonnes couplés au guide référence, et adaptés pour acheminer une partie du faisceau de référence dans les N colonnes du détecteur,
- chaque guide colonne étant couplé à M guides optiques, dits guides ligne, respectivement associés aux M pixels des M lignes du détecteur de ladite colonne, les M guides lignes étant configurés pour acheminer une partie du faisceau de référence dans chaque pixel de la colonne, dit faisceau référence pixel, le couplage entre le guide de référence et les N guides colonnes, ainsi que le couplage entre chaque guide colonne et les M guides lignes associés, étant passif, le coefficient de couplage entre le guide de référence et le N guides colonnes étant croissant entre la première et la dernière colonne pour assurer une intensité lumineuse similaire dans chaque colonne,
- chaque pixel du détecteur intégré comprenant :

  - une photodiode guidée couplée à un guide optique de détection,

  - un réseau de diffraction, dit réseau pixel, configuré pour coupler une portion d'un faisceau illuminant le pixel, dénommée faisceau couplé pixel, vers la photodiode guidée,

  - un coupleur, dit coupleur pixel, configuré pour coupler, dans le guide de détection, le faisceau couplé pixel et au moins une fraction du faisceau référence pixel,

la photodiode guidée étant ainsi configurée pour recevoir ledit faisceau couplé pixel et au moins ladite fraction du faisceau référence pixel,

- un circuit électronique de lecture et de prétraitement d'un signal détecté par la photodiode, le prétraitement comprenant une amplification et un filtrage.

Selon un mode de réalisation le dispositif de détection comprend en outre au moins un circuit électronique de traitement configuré pour calculer, pour chaque pixel, une fréquence d'un battement entre le faisceau référence pixel et le faisceau couplé pixel. Selon une option chaque pixel comprend son propre circuit électronique de traitement adapté pour calculer la fréquence de battement associée au pixel. Selon une autre option chaque colonne est connectée à un circuit électronique de traitement configuré pour calculer la fréquence de battement associée à chaque pixel de la colonne.

Selon un mode de réalisation le couplage entre le guide de référence et les N guides colonnes, ainsi que le couplage entre chaque guide colonne et les M guides lignes associés, est de type évanescent.

Selon une variante le dispositif de détection selon l'invention comprend en outre :

- une matrice d'éléments de déviation transmissifs, un élément de déviation étant associé à un pixel ou un groupe de pixels et configuré pour être orientable individuellement par un signal électrique de manière à dévier le ou les faisceaux illuminant le ou les pixels,

- chaque pixel ou groupe de pixel comprenant en outre une boucle d'asservissement associée à l'élément de déviation et configurée pour actionner l'élément de déviation de manière à maximiser un rapport signal sur bruit (SNR) du signal détecté généré par la photodiode guidée.

Préférentiellement l'élément de déviation est choisi parmi un prisme, un polyèdre, une calotte sphérique, un élément optique diffractif.

Selon un mode de réalisation une distance entre la matrice d'éléments de déviation et le détecteur intégré est comprise entre une à dix fois une dimension latérale de l'élément de déviation.

Selon une autre variante le dispositif de détection comprend en outre une matrice de microlentilles associée à la matrice de pixel, une microlentille étant configurée pour focaliser le faisceau illuminant le pixel associé sur le réseau pixel.

Selon une première variante du dispositif de détection selon l'invention :

- le réseau pixel et le coupleur pixel sont deux composants différents,

- le guide ligne est connecté au coupleur pixel,

- chaque pixel comprenant en outre un guide d'onde pixel couplé en amont au réseau pixel et en aval au coupleur pixel et configuré pour acheminer le faisceau couplé pixel vers le coupleur pixel.

Selon un mode de réalisation le coupleur pixel est une jonction Y.

Selon une deuxième variante du dispositif de détection selon l'invention :

- le réseau pixel est également le coupleur pixel,

- le réseau pixel est couplé en amont au guide ligne et en aval au guide de détection, de manière à acheminer ladite fraction du faisceau de référence pixel dans le guide de détection,

- le réseau pixel étant en outre configuré pour coupler vers l'espace libre, dans au moins une direction inverse à celle du faisceau illuminant le pixel, une autre fraction du faisceau de référence pixel dénommée faisceau objet pixel.

Selon un autre aspect l'invention concerne un système d'imagerie lidar cohérent.

Selon une première variante le lidar comprend :

- un dispositif de détection selon la première variante,

- une source laser configurée pour émettre un rayonnement laser présentant une fréquence optique modulée temporellement,

- un dispositif séparateur adapté pour séparer spatialement le rayonnement laser en un faisceau dit faisceau de référence et en un faisceau dit faisceau objet dirigé vers une scène à observer,

- un dispositif de couplage configuré pour coupler le faisceau de référence au détecteur intégré,

- un système optique d'imagerie réalisant une image de la scène en focalisant un faisceau réfléchi par la scène sur le dispositif de détection,

- une unité de traitement reliée au détecteur intégré et à la source laser comprenant le cas échéant un circuit électronique de traitement, lorsque celui-ci n'est pas localisé sur le détecteur intégré, le circuit électronique de traitement étant configuré pour déterminer une fréquence de battement entre le faisceau référence pixel et le faisceau couplé pixel, calculée pour chaque pixel, l'unité de traitement étant configurée pour déterminer une distance de points de la scène imagés sur les pixels du détecteur intégré, à partir de la fréquence de battement.

Selon un mode de réalisation le dispositif séparateur, le dispositif de couplage et le détecteur intégré sont réalisés sur un même substrat, le dispositif séparateur comprenant un circuit optique intégré se subdivisant en une pluralité de guides d'onde comprenant chacun au moins un réseau de diffraction, dit réseau objet, les réseaux objets étant configurés pour découpler une partie du faisceau laser du plan du circuit optique intégré de manière à former le faisceau objet, et en au moins un guide d'onde dépourvu de réseau guidant le faisceau de référence jusqu'au détecteur, et constituant le dispositif de couplage.

Selon une deuxième variante le lidar comprend :

- un dispositif de détection selon la deuxième variante,

- une source laser configurée pour émettre un rayonnement laser, présentant une fréquence optique modulée temporellement, et couplé au détecteur intégré, le rayonnement laser couplé dans le détecteur intégré formant le faisceau de référence,

- un système optique d'imagerie réalisant une image d'une scène à observer sur le détecteur intégré,

  une superposition des faisceau objet pixel issus des réseaux pixels et traversant le système optique d'imagerie formant un faisceau objet illuminant la scène, et un faisceau réfléchi par la scène et focalisé sur le détecteur intégré formant un faisceau d'illumination pour chaque pixel,

  le système d'imagerie comprenant en outre une unité de traitement reliée au détecteur intégré et à la source laser comprenant le cas échéant un circuit électronique de traitement, lorsque celui-ci n'est pas localisé sur le détecteur, le circuit électronique de traitement étant configuré pour déterminer une fréquence d'un battement entre le faisceau référence pixel et le faisceau couplé pixel, calculée pour chaque pixel, l'unité de traitement étant configurée pour déterminer une distance de points de la scène imagés sur les pixels du détecteur, à partir de la fréquence de battement.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig 1] La figure 1 déjà citée illustre le principe d'un lidar à modulation de fréquence FMCW.

[Fig 2] La figure 2 déjà citée illustre une architecture FMCW partiellement intégrée selon l'état d el'art.

[Fig 3] La figure 3 déjà citée illustre la recombinaison cohérente réalisée par le système décrit figure 2.

[Fig 4] La figure 4 déjà citée illustre deux cas de géométrie du speckle par rapport à un pixel, la figure de gauche correspond à des grains de speckle inférieurs à la dimension du pixel et la figure de droite correspond à des grains de speckle supérieurs à la dimension du pixel.

[Fig 5] La figure 5 illustre le dispositif de détection pour système d'imagerie lidar cohérent selon l'invention.

[Fig 6A] La figure 6A illustre un mode de réalisation préféré du détecteur de type « back side » (BSI) selon l'invention.

[Fig 6B] La figure 6B illustre un mode de réalisation du détecteur de type « front side » (FSI).

[Fig 7A] La figure 7A illustre une première variante du dispositif de détection selon l'invention dans laquelle le réseau pixel et le coupleur pixel sont deux composants différents.

[Fig 7B] La figure 7B illustre une vue en coupe du réseau pixel de la première variante.

[Fig 8A] La figure 8A illustre une deuxième variante du dispositif de détection selon l'invention dans laquelle le réseau pixel forme également le coupleur pixel.

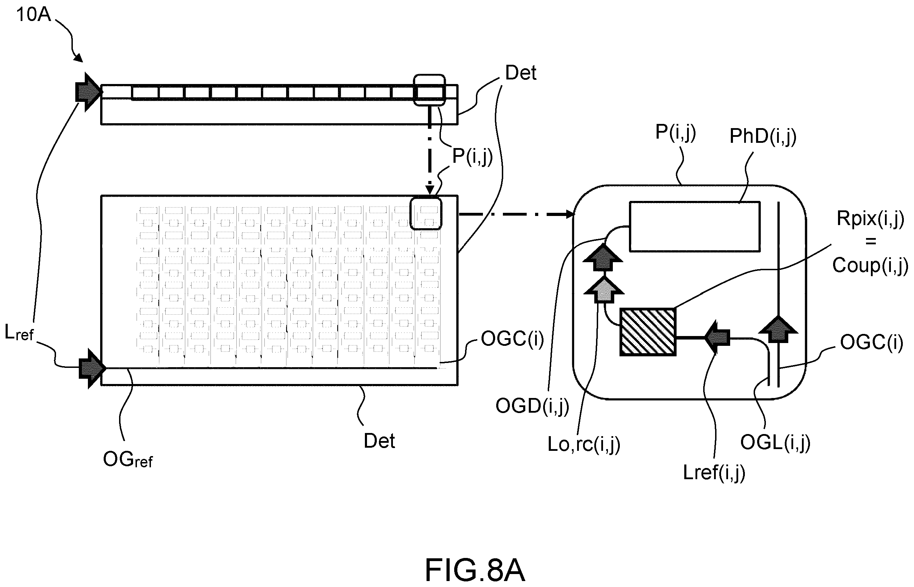

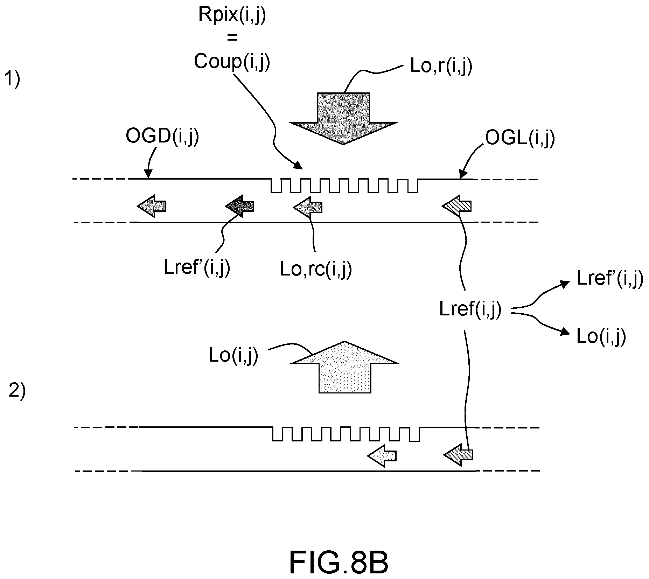

[Fig 8] La figure 8B illustre une vue en coupe du réseau pixel de la deuxième variante.

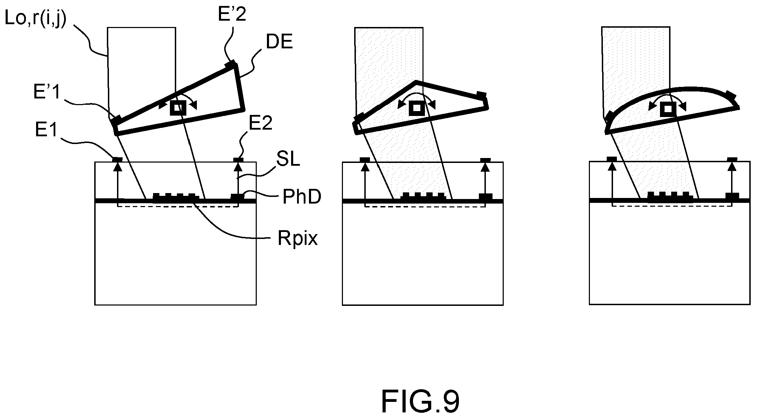

[Fig 9] La figure 9 illustre un mode de réalisation du dispositif de détection selon l'invention comprenant une matrice d'éléments de déviation.

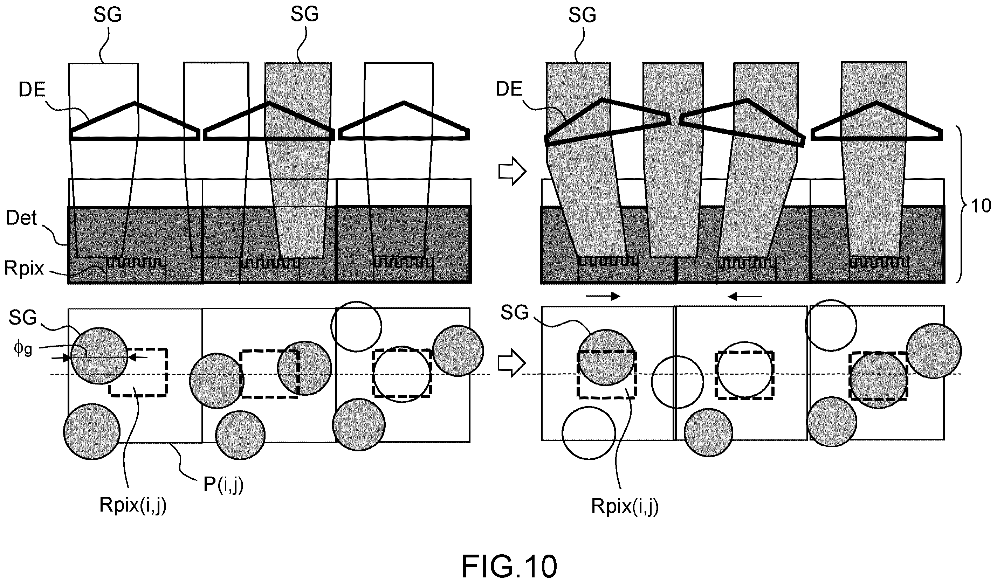

[Fig 10] La figure 10 illustre la manière dont la matrice d'éléments de déviation modifie la topographie du champ de speckle du faisceau d'illumination dans le plan du pixel.

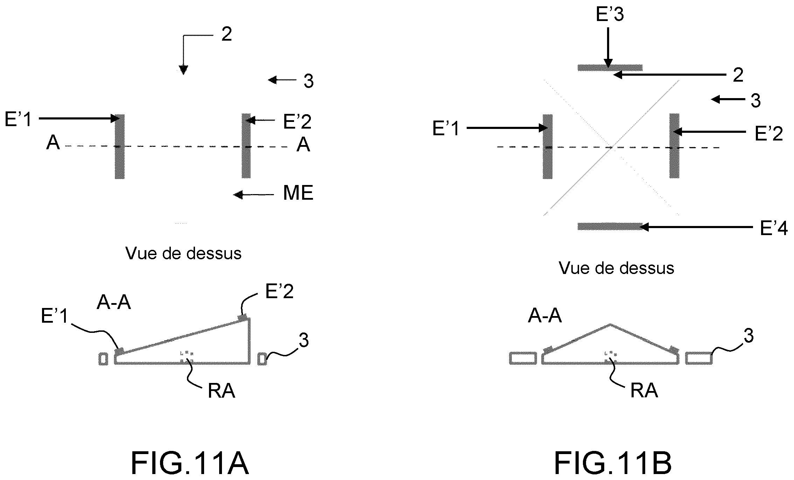

[Fig 11A] La figure 11A illustre un élément de déviation présentant une forme de prisme.

[Fig 11B] La figure 11B illustre un élément de déviation présentant une forme de polyèdre en forme de toit.

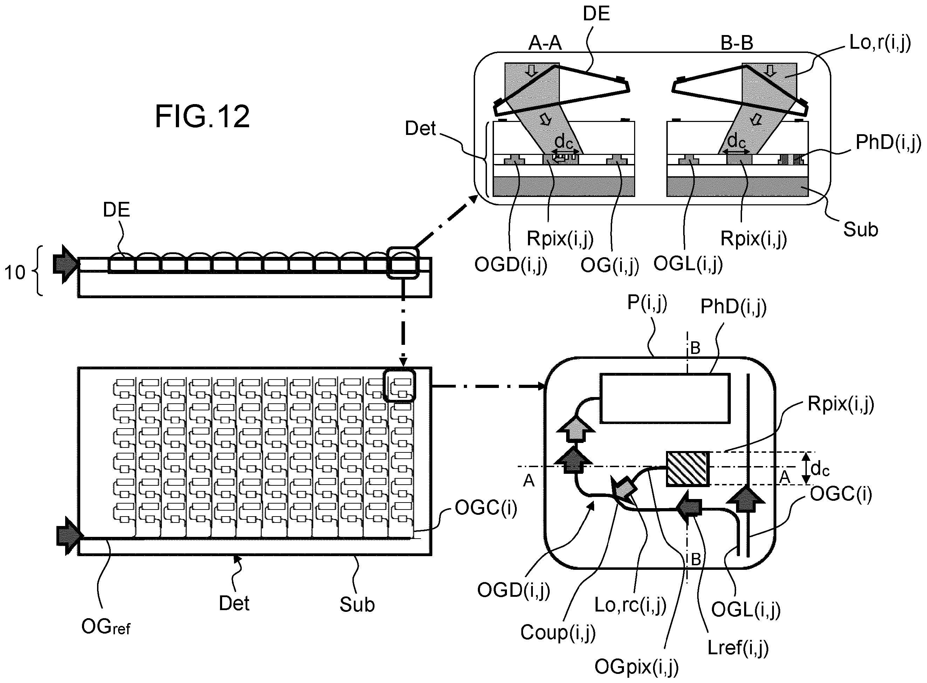

[Fig 12] La figure 12 illustre le dispositif de détection selon la première variante intégrant les éléments de déviation.

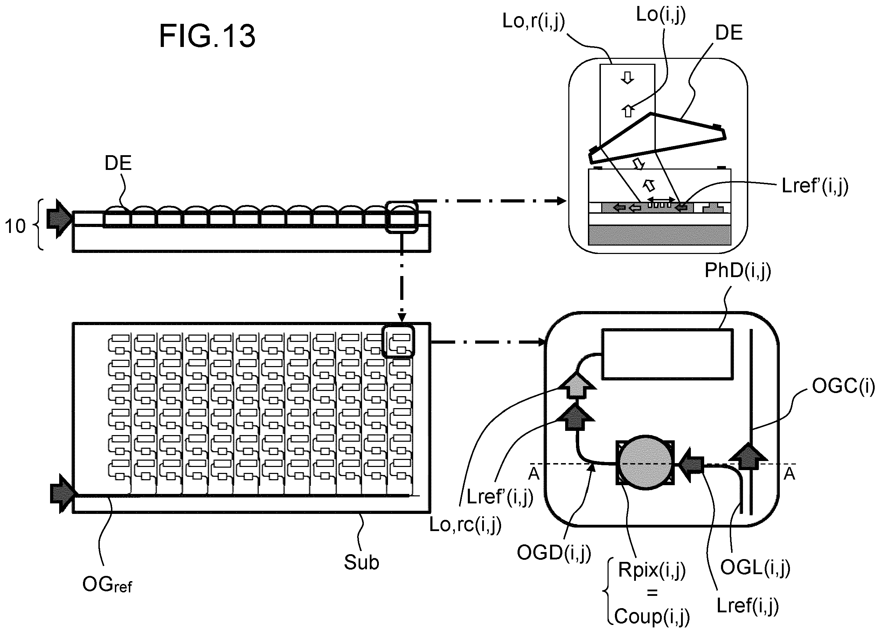

[Fig 13] La figure 13 illustre le dispositif de détection selon la deuxième variante intégrant les éléments de déviation.

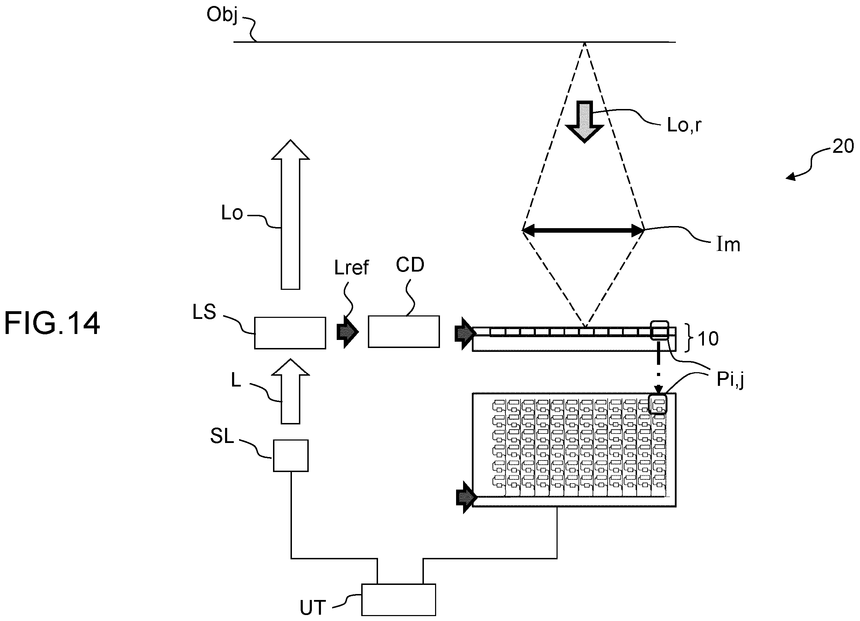

[Fig 14] La figure 14 illustre une première variante de lidar selon un autre aspect de l'invention comprenant un dispositif de détection selon l'invention selon la première variante.

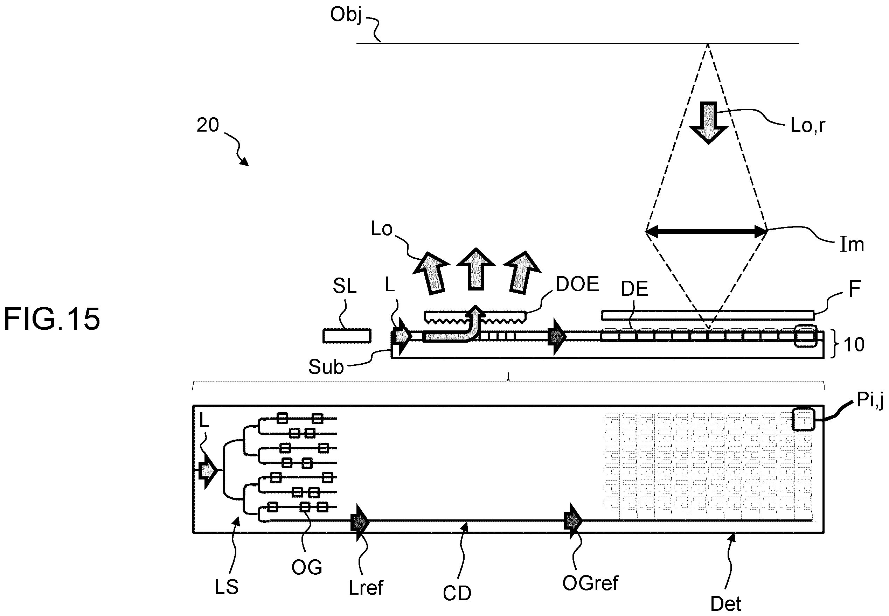

[Fig 15] La figure 15 illustre un mode de réalisation de la première variante de lidar dans laquelle le dispositif séparateur, le dispositif de couplage et le détecteur intégré sont réalisés sur un même substrat.

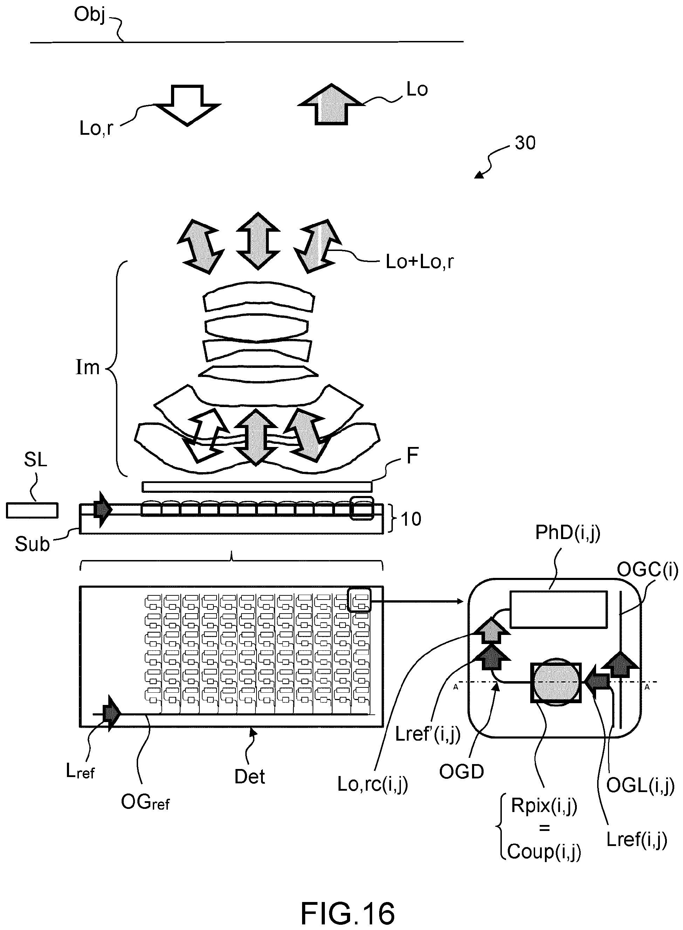

[Fig 16] La figure 16 illustre une deuxième variante de lidar selon un autre aspect de l'invention comprenant un dispositif de détection selon l'invention selon la deuxième variante.

## DESCRIPTION DETAILLEE DE L'INVENTION

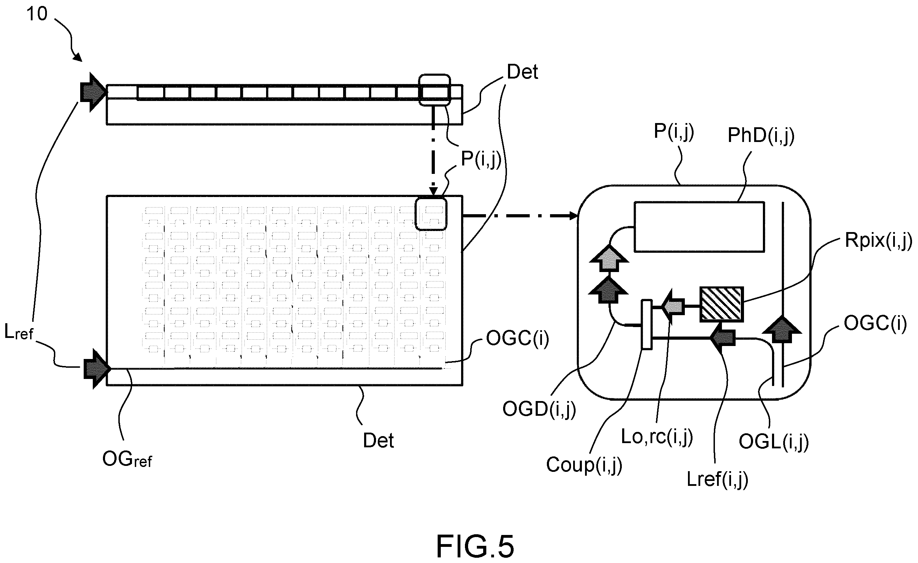

Le dispositif de détection 10 pour système d'imagerie lidar cohérent selon l'invention est schématisé figure 5. Il comprend un détecteur intégré Det comprenant une matrice de pixels P(i,j) répartis sur N colonnes (indice i) et M lignes (indice j).

Le détecteur Det comprend un guide optique dit guide référence OGref configuré pour recevoir un faisceau laser dit faisceau de référence Lref. Il comprend également N guides optiques OGC(i), dits guides colonnes, couplés au guide référence OGref, et adaptés pour acheminer une partie du faisceau de référence dans les N colonnes du détecteur. Chaque guide colonne i est couplé à M guides optiques OGL(i,j), dits guides ligne, respectivement associés aux M pixels des M lignes (indicées j) du détecteur de la colonne i. Les M guides lignes sont configurés pour acheminer une partie du faisceau de référence dans chaque pixel de la colonne. La partie du faisceau de référence arrivant dans chaque pixel est dénommée faisceau référence pixel Lref(i,j). Le couplage entre le guide de référence et les N guides colonnes, ainsi que le couplage entre chaque guide colonne et les M guides lignes associés, est passif. Selon un mode de réalisation préféré le couplage entre le guide de référence OGref et les N guides colonnes, ainsi que le couplage entre chaque guide colonne et les M guides lignes associés, est de type évanescent. Selon une autre mode de réalisation le couplage est de type jonction Y. Pour la répartition dans les N colonnes le coefficient de couplage (force de couplage) est prévu croissant entre la première et la dernière colonne pour assurer une intensité lumineuse similaire dans chaque colonne. Ceci est par exemple réalisé en augmentant progressivement la longueur de la zone de couplage dans le coupleur directionnel. Le même principe peut être répété sur chacune des colonnes pour alimenter les M guides associés aux M pixels en ligne situés le long de cette colonne.

Lorsque le détecteur est intégré à un lidar, la scène à observer est imagée sur le détecteur avec un système d'imagerie conçu pour fournir une certaine qualité d'image sur le détecteur (minimisation des aberrations géométriques en rapport avec les caractéristiques du détecteur, telles que le nombre et la taille des pixels).

Chaque pixel P(i,j) du détecteur intégré comprend une photodiode guidée PhD(i,j) couplée à un guide optique de détection OGD(i,j).

Un pixel comprend également un réseau de diffraction, dit réseau pixel Rpix(i,j), configuré pour coupler une portion Lo,rc(i,j) du faisceau illuminant le pixel Lo,r(i,j) (provenant de la scène via le système optique d'imagerie), dénommée faisceau couplé pixel, vers la photodiode guidée PhD(i,j). Le réseau pixel est par exemple un réseau gravé en surface d'un guide d'onde.

Un pixel comprend également un coupleur, dit coupleur pixel Coup(i,j), configuré pour coupler, dans le guide de détection OGD(i,j), le faisceau couplé pixel Lo,rc(i,j) et au moins une fraction Lref'(i,j) du faisceau référence pixel Lref(i,j).

Avec cette configuration la photodiode guidée PhD(i,j) est ainsi configurée pour recevoir le faisceau couplé pixel Lo,rc(i,j) et au moins lad fraction Lref'(i,j) du faisceau référence pixel Lref(i,j).

La lumière est couplée dans la photodiode selon une méthode classique, par un couplage en bout (« butt coupling » en anglais) ou par un couplage évanescent. Les deux faisceaux reçus par la photodiode interfèrent comme expliqué plus haut.

Enfin un pixel comprend un circuit électronique CEpt de lecture et de prétraitement du signal détecté par la photodiode, le prétraitement comprenant une amplification et un filtrage.

Un pixel de détecteur est ainsi composé de composants optiques intégrés (guides, réseau, coupleur) et électroniques intégrés (photodiode). Le caractère matriciel et intégré du détecteur Det selon l'invention le rend compatible d'un grand nombre de pixels permettant de réaliser une image lidar à haute résolution. En effet le fait que chaque pixel comprenne sa photodiode permet de considérablement diminuer les problèmes de routage de faisceaux et d'encombrement par de multiples guides d'onde, contrairement à l'architecture de Aflatouni. Le mélange hétérodyne s'effectue ici dans chaque pixel.

La photodiode est réalisée dans un substrat semi-conducteur, tel que du silicium, du germanium, un semiconducteur III-V tel que l'AsGa, InGaAs...

Le réseau pixel est typiquement une structure périodique gravée dans un guide d'onde.

Selon une variante préférée le détecteur Det selon l'invention comprend également au moins un circuit électronique de traitement configuré pour calculer, pour chaque pixel, la fréquence de battement F(i,j) entre le faisceau référence pixel et le faisceau couplé pixel. Le détecteur intègre ici l'électronique de traitement, ce qui réduit les flux de données du détecteur matriciel vers un processeur externe, et permet de ne sortir du détecteur que les données de distance.

Selon un mode de réalisation préféré de cette variante chaque pixel comprend son propre circuit électronique de traitement CE(i,j) adapté pour calculer la fréquence de battement associée au pixel. Tout le traitement est ainsi réalisé localement sur le pixel, traitement dit « global shutter », ce qui implique un fort niveau d'intégration au niveau de chaque pixel et un pixel d'une dimension suffisante.

Selon un autre mode de réalisation le traitement s'effectue par colonne, traitement de type « rolling shutter ». Pour cela chaque colonne est connectée à un circuit électronique de traitement CC(i) configuré pour calculer la fréquence de battement associée à chaque pixel de la colonne. La lecture s'effectue ligne par ligne pour tous les pixels d'une ligne (ce qui correspond à un pixel par colonne) en déroulant sur toutes les lignes successivement. Une telle architecteure limite les contraintes d'intégration dans le pixel, permettant d'en diminuer la taille, tout en réalisant le traitement en local sur la périphérie du détecteur.

Dans cette variante seul le post traitement d'image est réalisé dans une unité extérieure.

Selon une autre variante la fréquence de battement pour chaque pixel est calculée dans une unité externe.

Le réseau pixel présente préférentiellement une petite surface, par exemple pour une forme rectangulaire et carrée, une dimension d'un côté de quelques $\mu$m, inférieure à 10 $\mu$m. Cela permet au réseau d'avoir une acceptance angulaire relativement importante, compatible avec la plage angulaire de la lumière en provenance du système d'imagerie typiquement relativement ouvert pour récupérer un maximum de lumière.

Un réseau de faible dimension permet également d'être plus proche d'une situation dans laquelle le grain de speckle de la lumière incidente sur le pixel est du même ordre de grandeur que le réseau, permettant de collecter, dans un pixel, de la lumière issue d'un seul grain. Typiquement pour une longueur d'onde de 1.55 $\mu$m et une ouverture numérique du système optique d'imagerie de 3, le grain de speckle présente statistiquement une dimension d'environ 10 $\mu$m.

La matrice de photodiodes intégrées PhD est réalisée dans et/ou sur un substrat semiconducteur Sub sur lequel sont disposées des couches d'interconnexions IL qui sont des couches diélectriques isolantes dans lesquelles sont formées pistes et vias métalliques (interconnexions IM).

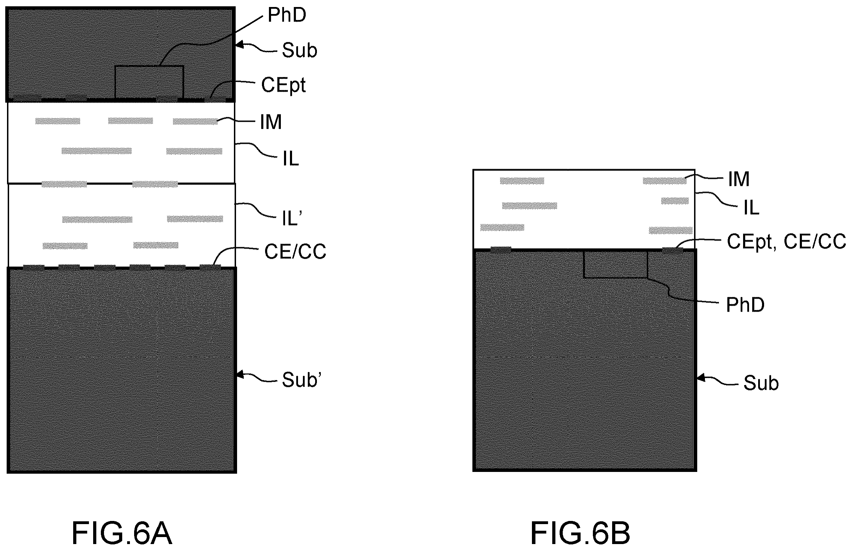

Les figures 6A et 6B illustres deux exemples de structures de détecteur Det selon l'invention. Les détecteurs des figures 6A et 6B comprennent également une matrice de microlentilles ML, optionnelle. Une microlentille ML est associée à un pixel du détecteur et focalise le faisceau qui illumine le pixel associé sur le réseau Rpix : toute la lumière incidente sur le pixel est redirigée vers le réseau. Ces microlentilles sont classiquement réalisées par fluage d'une couche de résine.

La figure 6A illustre un exemple de structure du détecteur Det, basée sur la structure d'imageurs dite « front side illumination » (FSI).

Les composants optiques (guides d'ondes, réseaux, photo-diodes guidées) sont typiquement formés par les techniques de micro-électronique connues pour la réalisation de circuits intégrés pour la photonique sur silicium. Dans cet exemple les guides d'onde et réseaux sont réalisés par gravure de la fine couche de silicium SOI (dite silicium sur isolant, « Silicon on Insulator » en anglais) située sur la couche d'oxyde enterrée BOX (pour « Buried Oxide » en anglais) déposée sur le substrat SUB. Un tel substrat comprenant une couche BOX et une couche SOI est dénommé substrat SOI. Les composants sont planarisés par dépôt d'un oxyde de remplissage 6 et polissage mécano-chimique.

Les photodiodes guidées utilisent des étapes additionnelles connues comme la croissance épitaxiale du matériau absorbant (exemple : Germanium) sur le silicium SOI, l'implantation des zones p et n, l'encapsulation diélectrique et la formation des contacts électriques.

Dans cette configuration FSI l'illumination s'effectue par la face avant i.e. la face du substrat Sub où sont situées les interconnexions métalliques. Tous les circuits électroniques (constitués de transistors, filtres, etc) nécessaires au fonctionnement du détecteur peuvent être formés à la surface du semi-conducteur(dans et/ou sur la couche de silicium SOI): circuit de pilotage et de lecture des photodiodes CEpt, circuit de traitement du signal pour la mesure de fréquence des battements CE/CC.

La figure 6B illustre un exemple de structure du détecteur Det, basée sur la structure d'imageurs dite « back side » (BSI).

On réalise un tel détecteur BSI par collage de l'ensemble substrat SOI/ couche IL sur un ensemble substrat support Sub'/couche IL' dans lequel on peut inclure des circuits CMOS (l'imageur est alors dit « 3D stacked ») tels que les circuits de traitement CE/CC (localisés dans les pixels ou en périphérie). Le substrat SOI est ensuite aminci typiquement jusqu'à disparition du substrat Sub (et optionnellement de la BOX). Une couche d'oxyde 5 peut ensuite être ajoutée en fin de process pour jouer le rôle de « piédestal », afin d'assurer bonne distance focale entre la microlentille et le réseau.

Dans cette configuration connue en micro-électronique, la lumière est incidente du côté ex substrat Sub (aminci) opposé aux interconnexions métalliques.

Le stacking 3D permet de décontraindre le design électronique en déportant le circuit de traitement du signal dans le substrat support. Une partie plus importante de la surface du pixel est disponible pour le circuit de lecture.

Contrairement aux architectures classiques FSI et BSI qui utilisent des photodiodes non guidées, dans les deux architectures selon l'invention ci-dessus la lumière se propage essentiellement dans le plan du substrat.

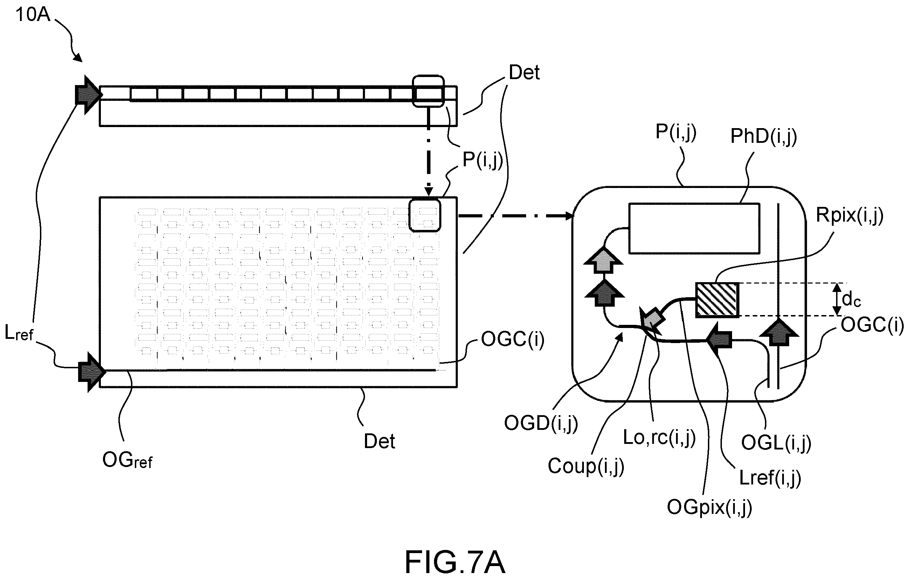

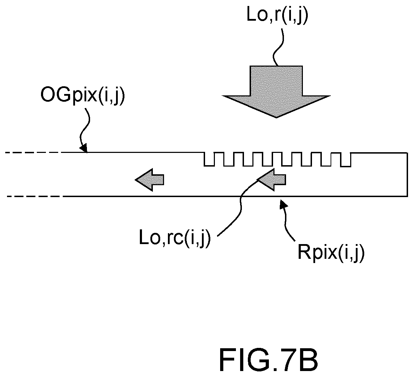

Le pixel du détecteur Det selon l'invention peut présenter deux architectures différentes. Une première variante du dispositif de détection 10A est illustrée figure 7A. Dans cette première variante le réseau pixel Rpix et le coupleur pixel Coup sont deux composants différents et le guide ligne OGL est connecté au coupleur pixel Coup. Un guide d'onde pixel OGpix est couplé en amont au réseau pixel Rpix et en aval au coupleur pixel Coup et achemine le faisceau couplé pixel Lor,c vers le coupleur pixel Coup. Dans cette variante l'intégralité du faisceau référence pixel Lref(i,j) est dirigée vers le coupleur Coup. La figure 7B illustre une vue en coupe du réseau pixel Rpix typiquement gravé dans le guide d'onde OGpix. Le réseau pixel dirige une partie Lo,rc(i,j) du faisceau éclairant le pixel Lo,r(i,j) dans le guide d'onde OGpix(i,j). Préférentiellement le coupleur pixel Coup est une jonction Y. Ainsi les voies objet (Lo,rc(i,j)) et référence (Lref(i,j)), chacune portée par leur guide d'onde, respectivement OGpix(i,j) et OGL (i,j), sont ensuite combinées via une jonction Y (Coup(i,j), et envoyées via OGD(i,j) sur la photodiode guidé PhD(i,j).

Une deuxième variante du dispositif de détection 10B est illustrée figure 8A. Dans cette première variante le réseau pixel Rpix est également le coupleur pixel Coup, c'est-à-dire qu'il remplit les deux fonctions, couplage de la lumière d'illumination Lo,r dans le pixel et couplage avec le faisceau de référence. Le réseau pixel Rpix(i,j) est couplé en amont au guide ligne OGL(i,j) et en aval au guide de détection OGD(i,j), de manière à acheminer la fraction Lref'(i,j) du faisceau de référence pixel Lref(i,j) dans le guide de détection. En outre le réseau pixel est également configuré pour coupler vers l'espace libre, dans au moins une direction inverse à celle du faisceau illuminant le pixel (provenant de la scène), une autre fraction du faisceau de référence pixel, dénommée faisceau objet pixel Lo(i,j).

Cette architecture permet, via le réseau pixel Rpix, une double utilisation du faisceau de référence pixel Lref(i,j) lors de l'intégration du détecteur dans un Lidar, comme illustré figure 8B.

La figure 8B 1) illustre une première fonction de couplage de l'onde Lo,r(i,j) dans le guide d'onde OGD(i,j) et de superposition de l'onde couplée Lo,rc(i,j) avec la fraction Lref'(i,j) du faisceau référence pixel Lref(i,j).

La figure 8B 2) illustre une deuxième fonction d'illumination : une autre fraction du faisceau référence pixel Lref(i,j) n'est pas envoyée vers la photodiode mais envoyée dans l'espace libre par le réseau pixel pour former le faisceau objet pixel Lo(i,j). L'onde issue de la superposition de tous les faisceaux objet pixel traverse le système d'imagerie et illumine la scène à observer.

L'architecture du lidar comprenant le détecteur Det selon cette deuxième variante 10B est simplifiée, le détecteur étant utilisé à la fois pour l'illumination de la scène et la détection de la lumière rétrodiffusée par celle-ci, à partir d'un unique faisceau cohérent généré par le laser et injecté dans le détecteur.

Pour pouvoir remplir cette double fonction le réseau diffractif doit avoir une acceptance angulaire élevée, compatible à la fois avec la plage angulaire de la lumière en provenance de l'optique d'imagerie et avec l'angle d'incidence du faisceau de référence.

A titre d'exemple, l'acceptance angulaire du réseau est de l'ordre de $\dfrac{\lambda}{dc}$ où dc est la largeur du réseau. Pour correspondre à la plage angulaire $\delta\Theta \sim 2\,\mathrm{asin}\left(\dfrac{1}{2N}\right) \sim \dfrac{1}{N}$ de la lumière issue de l'optique d'imagerie (N=nombre d'ouverture), la taille du réseau doit être telle que : $dc < N\lambda$, soit : $dc < 5\mu m$ pour N=3 et $\lambda$=1.55$\mu m$.

Selon un mode de réalisation compatible des deux variantes décrites ci-dessus le dispositif de détection 10 selon l'invention comprend également une matrice de microlentilles pour focaliser la lumière dans le pixel : une microlentille est associée à un pixel et est configurée pour focaliser le faisceau illuminant le pixel associé (ou au moins une partie de ce faisceau) sur le réseau pixel. Ces matrices sont réalisées selon les méthodes connues de la micro-électronique comme le fluage d'une résine ou la photo-lithographie en niveaux de gris.

Selon un autre mode de réalisation le dispositif de détection 10 selon l'invention comprend une matrice d'éléments de déviation DE transmissifs transparents à la longueur d'onde d'utilisation. Un élément de déviation DE est associé à un pixel ou un groupe de pixels et configuré pour être orientable individuellement par un signal électrique de manière à dévier le ou les faisceaux illuminant le ou les pixels. La figure 9 illustre ce mode de réalisation pour le cas, non limitatif, où on a un élément DE par pixel. La fonction de ces éléments est d'améliorer la détection de la lumière par les réseaux Rpix. Pour cela chaque pixel ou groupe de pixel comprend en outre une boucle d'asservissement SL associée à l'élément de déviation DE et configurée pour actionner l'élément de déviation de manière à maximiser un rapport signal sur bruit SNR du signal détecté généré par la photodiode guidée.

L'élément DE est d'épaisseur non constante, orientable selon un axe ou selon deux axes, ce ou ces axe(s) de rotation étant perpendiculaires au plan de détecteur. Is est préférentiellement choisi parmi un prisme (rotation selon un axe), un polyèdre, une calotte sphérique (voir la figure 9 illustrant ces trois formes), un élément optique diffractif.

Dans un lidar le faisceau issu de la scène et incident sur la matrice d'éléments de déviation est un champ de speckle dit subjectif car il s'agit du speckle formé dans l'image d'une scène par un système optique d'imagerie. La taille caractéristique latérale des grains de speckle est 2.$\lambda$.f#, du même ordre de grandeur que la tache d'Airy ou tache de diffraction du système optique, en négligeant les aberrations géométriques du système optique.

La matrice d'éléments de déviation DE modifie globalement la topographie du champ de speckle du faisceau d'illumination dans le plan du pixel, et notamment la répartition des grains de speckle SG, tel qu'illustré figure 10. On note $\Phi_g$ son diamètre moyen de la section d'un grain de speckle dans le plan du pixel, qui reste du même ordre de grandeur qu'en amont de la matrice des éléments de déviation, on a (voir plus haut) :

$$\Phi_g = 2.\lambda.f\#$$

Lorsqu'on modifie l'orientation d'un élément de déviation, on modifie également la répartition des grains de speckle dans le plan du pixel et donc la disposition des grains par rapport au réseau Rpix permettant de coupler la lumière incidente vers un guide d'onde. On cherche à centrer un grain de speckle sur le réseau. L'actionnement des éléments de déviation vise à augmenter le signal hétérodyne détecté par la photodiode PhD. Cette modification du champ de speckle est généralement complexe et difficile à décrire de façon analytique parce que les éléments de déviation opèrent en régime diffractif, c'est à dire que les effets de diffraction liés à leur taille latérale individuelle relativement réduite et à leur organisation en réseau matriciel ne sont pas négligeables.

En pratique, on modifie en aveugle le champ de speckle local à la surface du pixel. On ne connait ni la répartition initiale ni la répartition finale du speckle à la surface du pixel. On part du signal AC initial délivré par le photo-détecteur, correspondant au signal de battement du lidar (composante variable du signal détecté). On modifie l'orientation de l'élément de déviation dans un sens : si le signal AC augmente, on continue, et s'il diminue, on l'oriente dans l'autre sens. On recherche un optimum du signal AC, en suivant un algorithme d'optimisation dans un problème à 1 ou 2 dimensions suivant que le nombre d'axes de rotation de l'élément de rotation est 1 ou 2. On peut aboutir à un maximum local, ou absolu, mais en tous cas supérieur à la valeur initiale du signal AC. Si le signal AC est initialement nul ou quasiment nul, on scanne l'espace disponible jusqu'à obtenir un signal. Le signal AC d'oscillations détecté par chaque photodiode sert donc de signal d'asservissement pour l'actionnement de l'élément de déviation: c'est ce signal AC qui est maximisé en actionnant l'élément de déviation. En maximisant le signal AC on maximise le rapport signal sur bruit détecté, c'est-à-dire que l'on améliore le rendement hétérodyne en limitant l'impact du speckle.

Lorsqu'un élément de déviation est associé à un groupe de n x m pixels, l'asservissement s'effectue à partir des n x m signaux détectés par les photodiodes des pixels du groupe, et l'algorithme d'optimisation a n x m entrées. La déviation de l'élément DE correspond alors à un compromis entre les différents pixels du groupe.

L'utilisation d'éléments de déviation est particulièrement adaptée lorsque la dimension des grains de speckle est inférieure à celle du pixel, jusqu'à une dimension de l'ordre de grandeur de celle du réseau Rpix (dc), voire légèrement inférieure. Le réseau Rpix étant de petite taille (dc de quelques microns à une dizaine de microns), cette situation correspond à celle d'une optique d'imagerie relativement ouverte, qui est l'option préférée pour capter un maximum de lumière provenant de la scène.

A titre d'exemple, pour $\lambda$ = 1.55 $\mu$m et f# = 3 on a $\Phi_g \sim 10~\mu$m

La limite est qu'il ne faut pas qu'il y ait plusieurs grains sur la surface du réseau.

L'élément de déviation se présente en vue de dessus sous la forme d'une planche d'épaisseur non constante pouvant pivoter autour d'au moins un axe horizontal RA, et maintenue sur les côtés par deux bras latéraux 2 selon une direction perpendiculaire à cet axe de rotation, tel qu'illustré figure 11A pour un prisme (un axe de rotation) et figure 11B pour un polyèdre en forme de toit. Les bras sont reliés à un cadre fixe et rigide 3 sur la périphérie du pixel. Dans le cas de deux axes de rotation, on a deux cadres dont l'un peut pivoter par rapport à l'autre (figure 11B).

Préférentiellement l'actionnement est électrostatique et utilise un jeu d'électrodes. Chaque élément de déviation comprend au moins deux électrodes E'1, E'2 en regard respectivement d'au moins deux électrodes E1, E2 disposées à la surface du détecteur, l'actionnement de l'élément de déviation s'opérant de manière électrostatique par application de tensions électriques aux électrodes, et selon au moins un axe de rotation parallèle au plan du détecteur. Les électrodes E1 et E2 (et le cas échéant deux électrodes de plus) sont localisées à la surface du pixel en regard des électrodes de l'élément de déviation. Les électrodes E'1, E'2 (et le cas échéant E'3, E'4 voir figure 11B) de l'élément de déviation sont localisées soit sur sa surface supérieure, soit à l'intérieur.

Les électrodes sur le pixel peuvent être au même potentiel, et celles de l'élément de déviation à des potentiels différents, ou l'inverse. L'application des tensions différentes permet de produire des champs électrostatiques de direction verticale et d'attirer les différentes électrodes entre elles.

Les composants électroniques permettant de réaliser l'asservissement de la tension des électrodes peuvent être situés dans le CMOS au même niveau que l'électronique de lecture du pixel, ou d'un pixel du groupe (lorsqu'il y a un élément de déviation pour un groupe de pixels).

Préférentiellement la distance entre la matrice d'éléments de déviation et le détecteur intégré est comprise entre une à dix fois la dimension latérale de l'élément de déviation.

La figure 12 illustre le dispositif de détection 10 selon la première variante intégrant ces éléments de déviation DE et la figure 13 illustre le dispositif de détection 10 selon la deuxième variante. Dans la première variante seul les faisceaux d'illumination des pixels Lo,r(i,j) (provenant de la scène) traversent les éléments DE, tandis que dans la deuxième variante, la fraction Lo(i,j) issue du détecteur et se dirigeant vers la scène traverse également les éléments DE en sens inverse.

Selon un autre aspect l'invention concerne un système d'imagerie lidar cohérent intégrant un dispositif de détection selon l'invention.

Une première variante de lidar cohérent 20 est illustrée figure 14 et comprend un dispositif de détection selon la première variante (réseau et coupleur étant deux composants différents). Le lidar comprend en outre une source laser SL configurée pour émettre un rayonnement laser L présentant une fréquence optique $F_L$ modulée temporellement. La source laser est configurée pour qu'une longueur de cohérence de la source soit deux fois supérieure, préférentiellement 10 fois supérieure à une distance prédéterminée maximale zmax entre l'objet le plus éloigné de la scène et le lidar. En effet il est nécessaire que la longueur de cohérence lc de la source soit supérieure à la différence de chemin optique entre la voie objet et la voie de référence afin de réaliser une détection cohérente. Typiquement la longueur d'onde de fonctionnement $\lambda$ est comprise entre 0.8 $\mu$m et 10 $\mu$m. Les longueurs d'onde télécom entre 1.3 et 1.55$\mu$m, et notamment 1.55$\mu$m (à sécurité oculaire) présentent un intérêt particulier. La source laser est par exemple un laser à émission par la tranche (EEL pour *edge emitting laser* en anglais), ou une diode laser à cavité verticale émettant par la surface (VCSEL pour *vertical-cavity surface-emitting laser* en anglais), ou un laser à cascade quantique (QCL). Les lasers EEL ou VCSEL sont préférentiellement utilisés pour une émission laser à une longueur d'onde inférieure à 3$\mu m$ alors que les QCLs sont préférentiellement utilisés pour une émission laser à une longueur d'onde supérieure à 3$\mu m$.

Le lidar cohérent 20 comprend également un dispositif séparateur LS adapté pour séparer spatialement le rayonnement laser L en un faisceau dit faisceau de référence Lref et en un faisceau dit faisceau objet Lo dirigé vers la scène à observer Obj et un dispositif de couplage CD configuré pour coupler le faisceau de référence au détecteur intégré. Par exemple CD est une fibre optique.

Le lidar comprend également un système optique d'imagerie Im réalisant une image de la scène en focalisant le faisceau réfléchi par la scène Lo,r sur le dispositif de détection 10. L'optique Im présente une ouverture numérique f# adaptée pour que la dimension de grain de speckle $\Phi$g soit compatible avec la dimension (moyenne) du réseau de diffraction dc comme expliqué plus haut. Un cas optimal est lorsque la surface du réseau est inférieure à celle d'un grain de speckle. Mais comme il a été vu plus haut on souhaite une optique ouverte et donc on peut aller jusqu'à :

$$2.\lambda.f\# \geq dc/2$$

La limite est d'éviter que deux grains de speckle soient détectés par un même réseau.

Le dispositif de détection 10 est placé approximativement dans le plan focal image du système optique d'imagerie. Selon un mode de réalisation, le système optique d'imagerie possède une focale largement inférieure à la distance typique entre la scène et le détecteur (dans ce cas la scène est considérée à l'infini du point de vue du système d'optique d'imagerie). Le système optique d'imagerie Im est un objectif comprenant un diaphragme d'ouverture Diaph définissant la pupille physique du système. Typiquement le système optique d'imagerie est formé d'une lentille ou une pluralité de lentilles, par exemple un triple Gauss.

Le lidar cohérent 20 comprend en outre une unité de traitement UT reliée au détecteur intégré Det et à la source laser SL, et configurée pour déterminer une distance de points de la scène imagés sur les pixels du détecteur intégré, à partir de la fréquence de battement et à partir de la modulation de la fréquence optique du rayonnement laser. Elle peut également construire une image de distance instantanée de la scène. Par image de distance, on entend ici une cartographie de la distance des différents points de la scène observée correspondant chacun à un pixel différent.

L'unité de traitement UT comprend également le circuit électronique de traitement permettant de calculer la fréquence de battement pour chaque pixel , lorsque celui-ci n'est pas localisé sur le détecteur intégré.

Comparativement à un lidar FMCW de l'art antérieur, le lidar 20 selon l'invention permet d'effectuer une image instantanée où tous les points de la scène sont mesurés simultanément avec un début et une fin de mesure identiques pour tous les pixels, à condition que le détecteur Det le permette (fonctionnement en « global shutter » en anglais). Un fonctionnement en « rolling shutter » est également possible, l'acquisition d'une image s'effectue alors ligne par ligne, ce qui est plus lent mais permet la réalisation de pixels plus petits.

En outre, le lidar 20 ne nécessite pas de moyens de « beam-steering » pour scanner la scène à cadence rapide. Pour un fonctionnement à cadence vidéo, la durée de la mesure peut aller jusqu'à typiquement 20ms, ce qui relâche les contraintes à la fois sur la rapidité de l'imageur et la modulation de la fréquence optique à fournir par la source. Ainsi, le lidar selon l'invention propose un système d'imagerie active de distance, de grande résolution spatiale (nombre de points dans l'image donné par le nombre de pixels), robuste par rapport à la lumière parasite ambiante, éventuellement de type « global shutter » et pouvant fonctionner à cadence vidéo.

Par ailleurs le fait d'injecter directement le faisceau de référence dans le détecteur simplifie considérablement l'architecture du lidar par rapport aux lidars classiques.

Selon un mode de réalisation illustré figure 15 le dispositif séparateur LS, le dispositif de couplage CD et le détecteur intégré sont réalisés sur un même substrat Sub. Cela permet d'éviter les pertes de flux liées au transport et couplage du faisceau laser au détecteur. Le dispositif séparateur comprend un circuit optique intégré OC se subdivisant en une pluralité de guides d'onde comprenant chacun au moins un réseau de diffraction, dit réseau objet OG, les réseaux objets étant configurés pour découpler une partie du faisceau laser du plan du circuit optique intégré de manière à former le faisceau objet, et en au moins un guide d'onde dépourvu de réseau guidant le faisceau de référence jusqu'au détecteur, et constituant le dispositif de couplage. Il s'agit typiquement de OGref qui s'étend depuis le circuit OC jusqu'au détecteur.

En option le lidar comprend également un système de projection pour projeter la lumière sur une zone prédéterminée de la scène à observer dont on va ensuite former l'image sur le détecteur, donc typiquement une zone rectangulaire. De préférence, le système optique de projection éclaire la scène selon un cône d'ouverture angulaire sensiblement égale à l'angle de champ du système optique d'imagerie (qui est déterminé par sa distance focale et la taille du détecteur). Ainsi, quelle que soit la distance de la scène, son image correspond à la taille du détecteur. Le système optique de projection est préférentiellement adapté pour éclairer la zone prédéterminée de la scène de façon uniforme pour assurer par la suite un éclairement et un rapport signal sur bruit uniforme sur le détecteur si la scène est lambertienne.

En option le lidar comprend également un dispositif optique de mise en forme, par exemple un DOE (Diffractive Optical Element) constitué de motifs périodiques avec une période de l'ordre de la longueur d'onde du rayonnement laser, qui est agencé entre le circuit OC et la scène, afin de permettre d'améliorer l'uniformité de l'illumination.

Une deuxième variante de lidar cohérent 30 est illustrée figure 16 et comprend un dispositif de détection selon la deuxième variante (réseau formant également coupleur), de manière à réaliser une double fonction d'illumination et de couplage du rayonnement réfléchi par la scène dans le détecteur. La source laser SL, le système d'imagerie Im et l'unité de traitement présentent des caractéristiques similaires au lidar 20 précédent.

Ce lidar 30 ne comprend pas de dispositif de séparation LS et le dispositif de couplage/transport CD (par fibre optique ou optique intégré) du rayonnement issu du laser vers le détecteur est optionnel, ce rayonnement pouvant être directement injecté dans le détecteur.

Dans cette variante le système optique d'imagerie Im est traversé (sens détecteur vers scène) par les faisceaux objet pixel Lo(i,j) issus des réseaux pixels qui forment alors le faisceau objet Lo illuminant la scène. Le système Im est également traversé en sens inverse (sens scène vers détecteur) par le faisceau réfléchi par la scène Lo,r qui est focalisé sur le détecteur intégré pour former un faisceau d'illumination pour chaque pixel.

Ce lidar 30 présente une architecture simplifiée par rapport à celle du lidar 20, la fonction d'illumination étant intégrée au détecteur.

Un dimensionnement du système est donné à titre d'exemple :

Taille de pixel : 20 $\mu$m

Nombre de pixels : 320x240 (format QVGA)

Taille de détecteur : 6.4x4.8mm

FOV : 49x38°

Focale : 7mm

F# : 2 à 3

$\lambda$ : 1.55$\mu$m

$\Phi$g : 6 à 9$\mu$m

Taille de réseau : 3 à 5$\mu$m

Dans les deux systèmes lidar 20 et 30 selon l'invention l'ensemble de la scène à observer est illuminée simultanément. Il n'y a pas de scan de la scène avec le faisceau modulé en fréquence, et donc pas besoin de scanner le faisceau référence avec les pixels du détecteur. Pour cette raison il est possible d'utiliser un couplage passif entre les différents guides optique du dispositif de détection.

En outre dans les deux systèmes lidar 20 et 30 selon l'invention la modulation en fréquence est réalisée sur les deux voies, référence et objet. La fréquence de battement est dans ce cas faible (typiquement comprise entre 10 Hz et 10 MHz, préférentiellement entre 50 Hz et 2 MHz), et la bande passante de photo-détection est compatible d'une électronique de traitement de signaux simplifiée.

**Revendications**

1. Dispositif de détection (10, 10A, 10B) pour système d'imagerie lidar cohérent comprenant un détecteur intégré (Det) comprenant une matrice de pixels (Pi,j) répartis sur N colonnes et M lignes et comprenant :

- un guide optique dit guide référence (OGref) configuré pour recevoir un faisceau laser dit faisceau de référence,
- N guides optiques (OGC(i)), dits guides colonnes couplés au guide référence, et adaptés pour acheminer une partie du faisceau de référence dans les N colonnes du détecteur,

- chaque guide colonne étant couplé à M guides optiques (OGL(i,j)), dits guides ligne, respectivement associés aux M pixels des M lignes du détecteur de ladite colonne, les M guides lignes étant configurés pour acheminer une partie du faisceau de référence dans chaque pixel de la colonne, dit faisceau référence pixel (Lref(i,j)), le couplage entre le guide de référence et les N guides colonnes, ainsi que le couplage entre chaque guide colonne et les M guides lignes associés, étant passif, le coefficient de couplage entre le guide de référence et le N guides colonnes étant croissant entre la première et la dernière colonne pour assurer une intensité lumineuse similaire dans chaque colonne,
- chaque pixel (Pi,j) du détecteur intégré comprenant :

- une photodiode guidée (PhD(i,j)) couplée à un guide optique de détection (OGD(i,j)),
- un réseau de diffraction, dit réseau pixel (Rpix(i,j)), configuré pour coupler une portion d'un faisceau illuminant le pixel, dénommée faisceau couplé pixel (Lo,rc(i,j)), vers la photodiode guidée,
- un coupleur, dit coupleur pixel (Coup(i,j)), configuré pour coupler, dans le guide de détection, le faisceau couplé pixel et au moins une fraction (Lref'(i,j) du faisceau référence pixel,
la photodiode guidée étant ainsi configurée pour recevoir ledit faisceau couplé pixel et au moins ladite fraction (Lref'(i,j) du faisceau référence pixel,
- un circuit électronique de lecture et de prétraitement d'un signal détecté par la photodiode, le prétraitement comprenant une amplification et un filtrage.

2. Dispositif de détection selon la revendication précédente comprenant en outre au moins un circuit électronique de traitement configuré pour calculer, pour chaque pixel, une fréquence (F(i,j)) d'un battement entre le faisceau référence pixel et le faisceau couplé pixel.

3. Dispositif de détection selon la revendication précédente dans lequel chaque pixel comprend son propre circuit électronique de traitement (CE(i,j)) adapté pour calculer la fréquence de battement associée au pixel.

4. Dispositif de détection selon la revendication 2 dans lequel chaque colonne est connectée à un circuit électronique de traitement (CC(i)) configuré pour calculer la fréquence de battement associée à chaque pixel de la colonne.

5. Dispositif de détection selon l'une des revendications précédentes dans lequel le couplage entre le guide de référence et les N guides colonnes, ainsi que le couplage entre chaque guide colonne et les M guides lignes associés, est de type évanescent.

6. Dispositif de détection selon l'une des revendications précédentes comprenant en outre :

- une matrice d'éléments de déviation (DE) transmissifs, un élément de déviation étant associé à un pixel ou un groupe de pixels et configuré pour être orientable individuellement par un signal électrique de manière à dévier le ou les faisceaux illuminant le ou les pixels,
- chaque pixel ou groupe de pixel comprenant en outre une boucle d'asservissement (SL) associée à l'élément de déviation et configurée pour actionner l'élément de déviation de manière à maximiser un rapport signal sur bruit (SNR) du signal détecté généré par la photodiode guidée.

7. Dispositif de détection selon la revendication précédente dans lequel l'élément de déviation est choisi parmi un prisme, un polyèdre, une calotte sphérique, un élément optique diffractif.

8. Dispositif de détection selon l'une des revendications 6 ou 7 dans lequel une distance entre la matrice d'éléments de déviation et le détecteur intégré est comprise entre une à dix fois une dimension latérale de l'élément de déviation.

9. Dispositif de détection selon l'une des revendications 1 à 5 comprenant en outre une matrice de microlentilles associée à la matrice de pixel, une microlentille étant configurée pour focaliser le faisceau illuminant le pixel associé sur le réseau pixel.

10. Dispositif de détection (10A) selon l'une des revendications précédentes dans lequel :

- le réseau pixel et le coupleur pixel sont deux composants différents,
- le guide ligne est connecté au coupleur pixel,
- chaque pixel comprenant en outre un guide d'onde pixel (OGpix(i,j) couplé en amont au réseau pixel et en aval au coupleur pixel et configuré pour acheminer le faisceau couplé pixel vers le coupleur pixel.

11. Dispositif de détection selon la revendication précédente dans lequel le coupleur pixel est une jonction Y.

12. Dispositif de détection (10B) selon l'une des revendications 1 à 9 dans lequel :

- le réseau pixel est également le coupleur pixel,
- le réseau pixel est couplé en amont au guide ligne et en aval au guide de détection, de manière à acheminer ladite fraction du faisceau de référence pixel (Lref'(i,j)) dans le guide de détection,
- le réseau pixel étant en outre configuré pour coupler vers l'espace libre, dans au moins une direction inverse à celle du faisceau illuminant le pixel, une autre fraction du faisceau de référence pixel dénommée faisceau objet pixel (Lo(i,j)).

13. Système (20) d'imagerie lidar cohérent comprenant :

    - un dispositif de détection selon l'une des revendications 1 à 12,
    - une source laser (SL) configurée pour émettre un rayonnement laser (L) présentant une fréquence optique (F$_L$) modulée temporellement,
    - un dispositif séparateur (LS) adapté pour séparer spatialement le rayonnement laser (L) en un faisceau dit faisceau de référence (Lref) et en un faisceau dit faisceau objet (Lo) dirigé vers une scène à observer (Obj),
    - un dispositif de couplage (CD) configuré pour coupler le faisceau de référence au détecteur intégré,
    - un système optique d'imagerie (Im) réalisant une image de la scène en focalisant un faisceau réfléchi par la scène (Lo,r) sur le dispositif de détection (10),
    - une unité de traitement (UT) reliée au détecteur intégré et à la source laser comprenant le cas échéant un circuit électronique de traitement, lorsque celui-ci n'est pas localisé sur le détecteur intégré, le circuit électronique de traitement étant configuré pour déterminer une fréquence de battement entre le faisceau référence pixel et le faisceau couplé pixel, calculée pour chaque pixel, l'unité de traitement étant configurée pour déterminer une distance de points de la scène imagés sur les pixels du détecteur intégré, à partir de la fréquence de battement.

14. Système selon la revendications précédente dans lequel le dispositif séparateur (LS), le dispositif de couplage (CD) et le détecteur intégré sont réalisés sur un même substrat (Sub), le dispositif séparateur comprenant un circuit optique intégré (OC) se subdivisant en une pluralité de guides d'onde comprenant chacun au moins un réseau de diffraction, dit réseau objet (OG), les réseaux objets étant configurés pour découpler une partie du faisceau laser du plan du circuit optique intégré de manière à former le faisceau objet, et en au moins un guide d'onde dépourvu de réseau guidant le faisceau de référence jusqu'au détecteur, et constituant le dispositif de couplage.

15. Système (30) d'imagerie lidar cohérent comprenant :

    - un dispositif de détection selon la revendication 12,
    - une source laser (SL) configurée pour émettre un rayonnement laser (L), présentant une fréquence optique (F$_L$) modulée temporellement, et couplé au détecteur intégré, le rayonnement laser couplé dans le détecteur intégré formant le faisceau de référence,
    - un système optique d'imagerie (Im) réalisant une image d'une scène (Obj) à observer sur le détecteur intégré (Det),
    une superposition des faisceau objet pixel (Lo(i,j)) issus des réseaux pixels et traversant le système optique d'imagerie formant un faisceau objet (Lo) illuminant la scène, et
    un faisceau réfléchi par la scène (Lo,r) et focalisé sur le détecteur intégré formant un faisceau d'illumination pour chaque pixel,
    le système d'imagerie comprenant en outre une unité de traitement (UT) reliée au détecteur intégré et à la source laser comprenant le cas échéant un circuit électronique de traitement, lorsque celui-ci n'est pas localisé sur le détecteur, le circuit électronique de traitement étant configuré pour déterminer une fréquence (F(i,j)) d'un battement entre le faisceau référence pixel et le faisceau couplé pixel, calculée pour chaque pixel, l'unité de traitement étant configurée pour déterminer une distance de points de la scène imagés sur les pixels du détecteur, à partir de la fréquence de battement.

**Patentansprüche**

1. Detektionsvorrichtung (10, 10A, 10B) für ein kohärentes Lidar-Bildgebungssystem, die einen integrierten Detektor (Det) umfasst, der eine Matrix von Pixeln (Pi,j) umfasst, die auf N Spalten und M Zeilen verteilt sind, und umfassend:

    - einen Referenzleiter (OGref) genannten optischen Leiter, der konfiguriert ist, um einen Referenzstrahl genannten Laserstrahl zu empfangen,
    - N optische Leiter (OGC(i)), die Spaltenleiter genannt sind, die mit dem Referenzleiter gekoppelt sind, und angepasst sind, um einen Teil des Referenzstrahls in den N Spalten des Detektors weiterzuleiten,
    - wobei jeder Spaltenleiter mit M optischen Leitern (OGL(i,j)), Zeilenleiter genannt, gekoppelt ist, die jeweils M Pixeln der M Zeilen des Detektors der Spalte zugeordnet sind, wobei die M Zeilenleiter konfiguriert sind, um einen Teil des Referenzstrahls in jedem Pixel der Spalte, Pixelreferenzstrahl (Lref(i,j)) genannt, weiterzuleiten, wobei die Kopplung zwischen dem Referenzleiter und den N Spaltenleitern, sowie die Kopplung zwischen jedem Spaltenleiter und den M zugeordneten Zeilenleitern passiv ist, wobei der Kopplungskoeffizient zwischen dem Referenzleiter und den N Spaltenleitern zwischen der ersten und der letzten Spalte ansteigend ist, um für eine ähnliche Leuchtstärke in jeder Spalte zu sorgen,

- wobei jedes Pixel (Pi,j) des integrierten Detektors umfasst:

    - eine geleitete Photodiode (PhD(i,j)), die an einen optischen Detektionsleiter (OGD(i,j)) gekoppelt ist,

    - ein Pixelgitter genanntes Beugungsgitter (Rpix(i,j)), das konfiguriert ist, um einen Abschnitt eines das Pixel beleuchtenden Strahls, der als gekoppelter Pixelstrahl (Lo,rc(i,j)) bezeichnet wird, zur geleiteten Photodiode zu koppeln,

    - einen Pixelkoppler genannten Koppler (Coup(i,j)), der konfiguriert ist, um im Detektionsleiter den gekoppelten Pixelstrahl und mindestens eine Fraktion (Lref'(i,j) des Pixelreferenzstrahls zu koppeln,

    wobei die geleitete Photodiode so konfiguriert ist, um den gekoppelten Pixelstrahl und mindestens die Fraktion (Lref'(i,j) des Pixelreferenzstrahls zu empfangen,

    - eine elektronische Schaltung zum Lesen und Vorbehandeln eines von der Photodiode detektierten Signals, wobei die Vorbehandlung eine Verstärkung und eine Filterung umfasst.

2. Detektionsvorrichtung nach dem vorstehenden Anspruch, die weiter mindestens eine elektronische Behandlungsschaltung umfasst, die konfiguriert ist, um für jedes Pixel eine Frequenz (F(i,j)) eines Schlags zwischen dem Pixelreferenzstrahl und dem gekoppelten Pixelstrahl zu berechnen.

3. Detektionsvorrichtung nach einem vorstehenden Anspruch, wobei jedes Pixel seine eigene elektronische Behandlungsschaltung (CE(i,j)) umfasst, die angepasst ist, um die dem Pixel zugeordnete Schlagfrequenz zu berechnen.

4. Detektionsvorrichtung nach Anspruch 2, wobei jede Spalte mit einer elektronischen Behandlungsschaltung (CC(i)) verbunden ist, die konfiguriert ist, um die jedem Pixel der Spalte zugeordnete Schlagfrequenz zu berechnen.

5. Detektionsvorrichtung nach einem der vorstehenden Ansprüche, wobei die Kopplung zwischen dem Referenzleiter und den N Spaltenleitern, sowie die Kopplung zwischen jedem Spaltenleiter und den M zugeordneten Zeilenleitern vom vergänglichen Typ ist.

6. Detektionsvorrichtung nach einem der vorstehenden Ansprüche, weiter umfassend:

    - eine Matrix transmissiver Ablenkungselemente (DE), wobei ein Ablenkungselement einem Pixel oder einer Pixelgruppe zugeordnet und konfiguriert ist, um einzeln durch ein elektrisches Signal ausrichtbar zu sein, um den oder die Strahlen, der/die das oder die Pixel beleuchten, abzulenken,

    - wobei jedes Pixel oder Pixelgruppe weiter eine Ansteuerungsschleife (SL) umfasst, die dem Ablenkungselement zugeordnet und konfiguriert ist, um das Ablenkungselement zu betätigen, um ein Signal-zu-Rausch-Verhältnis (SNR) des von der geleiteten Photodiode erzeugten detektierten Signals zu maximieren.

7. Detektionsvorrichtung nach dem vorstehenden Anspruch, wobei das Ablenkungselement aus einem Prisma, einem Polyeder, einer Kugelhaube, einem optischen Beugungselement ausgewählt ist.

8. Detektionsvorrichtung nach einem der Ansprüche 6 oder 7, wobei ein Abstand zwischen der Matrix von Ablenkungselementen und dem integrierten Detektor zwischen ein bis zehn mal einer Seitenabmessung des Ablenkungselements umfasst ist.

9. Detektionsvorrichtung nach einem der Ansprüche 1 bis 5, der weiter eine Matrix von Mikrolinsen umfasst, die der Matrix von Pixeln zugeordnet ist, wobei eine Mikrolinse konfiguriert ist, um einen Strahl zu fokussieren, der das Pixel beleuchtet, das dem Pixelgitter zugeordnet ist.

10. Detektionsvorrichtung (10A) nach einem der voranstehenden Ansprüche, wobei:

    - das Pixelgitter und der Pixelkoppler zwei verschiedene Komponenten sind,

    - der Zeilenleiter mit dem Pixelkoppler verbunden ist,

    - wobei jedes Pixel weiter einen Pixelwellenleiter (OGpix(i,j) umfasst, der stromaufwärts des Pixelgitters und stromabwärts des Pixelkopplers gekoppelt, und konfiguriert ist, um den gekoppelten Pixelstrahl zum Pixelkoppler weiterzuleiten.

11. Detektionsvorrichtung nach dem vorstehenden Anspruch, wobei der Pixelkoppler eine Y-Verbindung ist.

12. Detektionsvorrichtung (10B) nach einem der Ansprüche 1 bis 9, wobei:

- das Pixelgitter auch der Pixelkoppler ist,
- das Pixelgitter stromaufwärts des Zeilenleiters und stromabwärts des Detektionsleiters gekoppelt ist, um die Fraktion des Pixelreferenzstrahls (Lref'(i,j)) im Detektionsleiter weiterzuleiten,
- das Pixelgitter weiter konfiguriert ist, um zum freien Raum, in mindestens einer Richtung umgekehrt zu jener des Strahls, der das Pixel beleuchtet, eine andere Fraktion des als Pixelobjektstrahl (Lo(i,j)) bezeichneten Pixelreferenzstrahls zu koppeln.

13. Kohärentes Lidar-Bildgebungssystem (20), umfassend:

- eine Detektionsvorrichtung nach einem der Ansprüche 1 bis 12,
- eine Laserquelle (SL), die konfiguriert ist, um eine Laserstrahlung (L) zu emittieren, die eine zeitlich modulierte optische Frequenz ($F_L$) aufweist,
- eine Trennvorrichtung (LS), die angepasst ist, um die Laserstrahlung (L) räumlich in einen Referenzstrahl genannten Strahl (Lref) und in einen Objektstrahl genannten Strahl (Lo), der zu einer zu beobachtenden Szene (Obj) gerichtet ist, zu trennen,
- eine Kopplungsvorrichtung (CD), die konfiguriert ist, um den Referenzstrahl mit dem integrierten Detektor zu koppeln,
- ein optisches Bildgebungssystem (Im), das ein Bild der Szene durch Fokussieren eines von der Szene reflektierten Strahls (Lo,r) auf die Detektionsvorrichtung (10) realisiert,
- eine Behandlungseinheit (UT), die mit dem integrierten Detektor und mit der Laserquelle verbunden ist, die gegebenenfalls eine elektronische Behandlungsschaltung umfasst, wenn diese nicht auf dem integrierten Detektor lokalisiert ist, wobei die elektronische Behandlungsschaltung konfiguriert ist, um eine Schlagfrequenz zwischen dem Pixelreferenzstrahl und dem gekoppelten Pixelstrahl zu bestimmen, die für jedes Pixel berechnet wird, wobei die Behandlungseinheit konfiguriert ist, um eine Distanz von Punkten der abgebildeten Szene auf die Pixel des integrierten Detektors aus der Schlagfrequenz zu bestimmen.

14. System nach dem vorstehenden Anspruch, wobei die Trennvorrichtung (LS), die Kopplungsvorrichtung (CD) und der integrierte Detektor auf einem gleichen Substrat (Sub) realisiert sind, wobei die Trennvorrichtung eine integrierte optische Schaltung (OC) umfasst, die sich in eine Vielzahl von Wellenleitern unterteilt, die jeweils mindestens ein Objektgitter genanntes Beugungsgitter umfassen (OG) umfassen, wobei die Objektgitter konfiguriert sind, um einen Teil des Laserstrahls von der Ebene der integrierten optischen Schaltung abzukoppeln, um das Objektgitter zu bilden, und in mindestens einen Wellenleiter, der mit keinem Gitter versehen ist, das den Referenzstrahl bis zum Detektor leitet, und die Kopplungsvorrichtung darstellt.

15. Kohärentes Lidar-Bildgebungssystem (30), umfassend:

- eine Detektionsvorrichtung nach Anspruch 12,
- eine Laserquelle (SL), die konfiguriert ist, um eine Laserstrahlung (L) zu emittieren, die eine zeitlich modulierte optische Frequenz ($F_L$) aufweist, und mit dem integrierten Detektor gekoppelt ist, wobei die in dem integrierten Detektor gekoppelte Laserstrahlung den Referenzstrahl bildet,
- ein optisches Bildgebungssystem (Im), das ein Bild einer zu beobachtenden Szene (Obj) auf dem integrierten Detektor (Det) realisiert, eine Überlagerung der Pixelobjektstrahlen (Lo(i,j)), die aus den Pixelgittern stammen, und das optische Bildgebungssystem durchqueren, die einen Objektstrahl (Lo) bildet, der die Szene beleuchtet, und einen Strahl, der von der Szene (Lo,r) reflektiert und auf den integrierten Detektor fokussiert wird, der einen Beleuchtungsstrahl für jedes Pixel bildet, wobei das Bildgebungssystem weiter eine Behandlungseinheit (UT), die mit dem integrierten Detektor und mit der Laserquelle verbunden ist, die gegebenenfalls eine elektronische Behandlungsschaltung umfasst, wenn diese nicht auf dem Detektor lokalisiert ist, wobei die elektronische Behandlungsschaltung konfiguriert ist, um eine Frequenz (F(i,j)) eines Schlags zwischen dem Pixelreferenzstrahl und dem gekoppelten Pixelstrahl zu bestimmen, die für jedes Pixel berechnet wird, wobei die Behandlungseinheit konfiguriert ist, um eine Distanz von Punkten der abgebildeten Szene auf die Pixel des Detektors aus der Schlagfrequenz zu bestimmen.

## Claims

1. Detection device (10, 10A, 10B) for a coherent lidar imaging system comprising an integrated detector (Det) comprising a matrix array of pixels (Pi,j) distributed over N columns and M rows and comprising:

- an optical guide, called reference guide (OGref), configured so as to receive a laser beam, called reference beam,
- N optical guides (OGC(i)), called column guides, coupled to the reference guide, and designed to route part of the reference beam into the N columns of the detector,
- each column guide being coupled to M optical guides (OGL(i,j)), called row guides, respectively associated with the M pixels of the M rows of the detector of said column, the M row guides being configured so as to route part of the reference beam into each pixel of the column, called pixel reference beam (Lref(i,j)), the coupling between the reference guide and the N column guides, as well as the coupling between each column guide and the M associated row guides, being passive, the coupling coefficient between the reference guide and the N column guides increasing between the first and the last column to ensure a similar luminous intensity in each column,
- each pixel (Pi,j) of the integrated detector comprising:

  - a guided photodiode (PhD(i,j)) coupled to an optical detection guide (OGD(i,j)),
  - a diffraction grating, called pixel grating (Rpix(i,j)), configured so as to couple a portion of a beam illuminating the pixel, called pixel coupled beam (Lo,rc(i,j)), into the guided photodiode,
  - a coupler, called pixel coupler (Coup(i,j)), configured so as to couple the pixel coupled beam and at least a fraction (Lref'(i,j)) of the pixel reference beam into the detection guide,
  the guided photodiode thus being configured so as to receive said pixel coupled beam and at least said fraction (Lref'(i,j)) of the pixel reference beam,
  - an electronic circuit for readout and for preprocessing of a signal detected by the photodiode, the preprocessing comprising amplification and filtering.

2. Detection device according to the preceding claim, furthermore comprising at least one electronic processing circuit configured so as to calculate, for each pixel, a frequency (F(i,j)) of a beat between the pixel reference beam and the pixel coupled beam.

3. Detection device according to the preceding claim, wherein each pixel comprises its own electronic processing circuit (CE(i,j)) designed to calculate the beat frequency associated with the pixel.

4. Detection device according to claim 2, wherein each column is connected to an electronic processing circuit (CC(i)) configured so as to calculate the beat frequency associated with each pixel of the column.

5. Detection device according to any one of the preceding claims, wherein the coupling between the reference guide and the N column guides, as well as the coupling between each column guide and the M associated row guides, is evanescent.

6. Detection device according to any one of the preceding claims, furthermore comprising:

   - a matrix array of transmissive deflecting elements (DE), a deflecting element being associated with a pixel or a group of pixels and configured so as to be able to be oriented individually by an electrical signal so as to deflect the one or more beams illuminating the one or more pixels,
   - each pixel or pixel group furthermore comprising a control loop (SL) associated with the deflecting element and configured so as to actuate the deflecting element so as to maximize a signal-to-noise ratio (SNR) of the detected signal generated by the guided photodiode.

7. Detection device according to the preceding claim, wherein the deflecting element is chosen from a prism, a polyhedron, a spherical dome, and a diffractive optical element.

8. Detection device according to any one of claims 6 or 7, wherein a distance between the matrix array of deflecting elements and the integrated detector is between one and ten times a lateral dimension of the deflecting element.

9. Detection device according to any one of claims 1 to 5, furthermore comprising a matrix array of microlenses associated with the pixel matrix array, a microlens being configured so as to focus the beam illuminating the associated pixel on the pixel grating.

10. Detection device (10A) according to any one of the preceding claims, wherein:

    - the pixel grating and the pixel coupler are two different components,
    - the row guide is connected to the pixel coupler,
    - each pixel furthermore comprising a pixel waveguide (OGpix(i,j)) coupled upstream to the pixel grating and downstream to the pixel coupler and configured so as to route the pixel coupled beam to the pixel coupler.

11. Detection device according to the preceding claim, wherein the pixel coupler is a Y-junction.

12. Detection device (10B) according to any one of claims 1 to 9, wherein:

- the pixel grating is also the pixel coupler,
- the pixel grating is coupled upstream to the row guide and downstream to the detection guide, so as to route said fraction of the pixel reference beam (Lref'(i,j)) into the detection guide,
- the pixel grating furthermore being configured so as to couple another fraction of the pixel reference beam, called pixel object beam (Lo(i,j)), into free space, in at least one direction opposite that of the beam illuminating the pixel.

13. Coherent lidar imaging system (20) comprising:

- a detection device according to any one of claims 1 to 12,
- a laser source (SL) configured so as to emit laser radiation (L) having a temporally modulated optical frequency ($F_L$),
- a splitter device (LS) designed to spatially split the laser radiation (L) into a beam, called reference beam (Lref), and into a beam, called object beam (Lo), that is directed towards the scene to be observed (Obj),
- a coupling device (CD) configured so as to couple the reference beam into the integrated detector,
- an optical imaging system (Im) producing an image of the scene by focusing a beam reflected by the scene (Lo,r) on the detection device (10),
- a processing unit (UT) connected to the integrated detector and to the laser source comprising, where applicable, an electronic processing circuit when it is not located on the integrated detector, the electronic processing circuit being configured so as to determine a beat frequency between the pixel reference beam and the pixel coupled beam, calculated for each pixel, the processing unit being configured so as to determine a distance of points of the scene that are imaged on the pixels of the integrated detector, based on the beat frequency.

14. System according to the preceding claim, wherein the splitter device (LS), the coupling device (CD) and the integrated detector are produced on the same substrate (Sub), the splitter device comprising an integrated optical circuit (OC) subdividing into a plurality of waveguides each comprising at least one diffraction grating, called object grating (OG), the object gratings being configured so as to decouple part of the laser beam from the plane of the integrated optical circuit so as to form the object beam, and into at least one waveguide without a grating guiding the reference beam to the detector, and forming the coupling device.

15. Coherent lidar imaging system (30) comprising:

- a detection device according to claim 12,
- a laser source (SL) configured so as to emit laser radiation (L), having a temporally modulated optical frequency ($F_L$), and coupled to the integrated detector, the laser radiation coupled into the integrated detector forming the reference beam,
- an optical imaging system (Im) producing an image of a scene (Obj) to be observed on the integrated detector (Det),
a superposition of the pixel object beams (Lo(i,j)) from the pixel gratings and passing through the optical imaging system forming an object beam (Lo) illuminating the scene, and
a beam reflected by the scene (Lo,r) and focused on the integrated detector forming an illumination beam for each pixel,
the imaging system furthermore comprising a processing unit (UT) connected to the integrated detector and to the laser source comprising, where applicable, an electronic processing circuit when it is not located on the detector, the electronic processing circuit being configured so as to determine a frequency (F(i,j)) of a beat between the pixel reference beam and the pixel coupled beam, calculated for each pixel, the processing unit being configured so as to determine a distance of points of the scene that are imaged on the pixels of the detector, based on the beat frequency.

FIG.1

FIG.2

FIG.3

FIG.4

FIG.5

EP 3 913 393 B1

EP 3 913 393 B1

PhD

Sub

CEpt

IM

IL

IL'

CE/CC

Sub'

FIG.6A

IM

IL

CEpt, CE/CC

PhD

Sub

FIG.6B

FIG.7A

FIG.7B

FIG.8A

EP 3 913 393 B1

FIG.8B

FIG.9

FIG.10

EP 3 913 393 B1

2

← 3

E'1 →

E'2

A — · — · — · — · — · — · — · — A

← ME

Vue de dessus

A-A

E'2

E'1

3

RA

**FIG.11A**

E'3

2

← 3

E'1 →

E'2

· — · — · — · — · — · — · — ·

E'4

Vue de dessus

A-A

3

RA

**FIG.11B**

FIG.12

FIG.13

FIG.14

FIG.15

**FIG.16**

## EP 3 913 393 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2016105082 A

**Littérature non-brevet citée dans la description**

- **AFLATOUNI**. Nano photonic coherent imager. *Optics Express*, 2015, vol. 23 (4), 5117